# EUROPEAN PATENT APPLICATION

(11) **EP 3 697 119 A1**
(43) Date of publication of application: **19.08.2020**
(21) Application number: 18878836.8
(22) Date of filing: 17.11.2018
(51) Int. Cl.: H04W 12/06

(54) **AUTHENTICATION METHOD AND DEVICE**

(30) Priority: 20.11.2017 CN 201711158711
(71) Applicant: Huawei Technologies Co., Ltd., Longgang District Shenzhen, Guangdong 518129 (CN)
(72) Inventor: ZHU, Hualin, Shenzhen Guangdong 518129 (CN); LI, Huan, Shenzhen Guangdong 518129 (CN); JIN, Weisheng, Shenzhen Guangdong 518129 (CN)
(74) Representative: Grünecker Patent- und Rechtsanwälte PartG mbB
(86) International application number: PCT/CN2018/116066
(87) International publication number: WO 2019/096287

(57) **Abstract**

Embodiments of this application provide an authentication method and apparatus. The method includes: receiving, by an access network element, access authentication information from a terminal device; generating, by the access network element, a first message based on the access authentication information, where the first message includes the access authentication information; sending, by the access network element, the first message to an access management network element; receiving, by the access network element, a first response message from the access management network element in response to the first message, where the first response message includes response information of the access authentication information; and sending, by the access network element, the response information of the access authentication information to the terminal device based on the first response message. The method in the embodiments of this application can resolve a problem that different transmission protocols of network element authentication information do not adapt to each other.

## Description

This application claims priority to Chinese Patent Application No. 201711158711.1, filed with the China National Intellectual Property Administration on November 20, 2017 and entitled "AUTHENTICATION METHOD AND APPARATUS", which is incorporated herein by reference in its entirety.

### TECHNICAL FIELD

Embodiments of this application relate to the communications field, and more specifically, to an authentication method and apparatus.

### BACKGROUND

In a 5th generation (5th generation, 5G) communications network, a terminal device is allowed to access a core network by using a non-3rd generation partnership project (3rd generation partnership project, 3GPP) access network. However, because architectures of the 5G communications network and a 4G communications network are different, an existing access authentication method for a terminal device is not applicable to the 5G communications network.

### SUMMARY

Embodiments of this application provide an authentication method and apparatus, which can be applied to a new-generation communications network.

According to a first aspect of this application, an authentication method is provided. The method includes: receiving, by an access network element, access authentication information from a terminal device; generating, by the access network element, a first message based on the access authentication information, where the first message includes the access authentication information; sending, by the access network element, the first message to an access management network element; receiving, by the access network element, a first response message from the access management network element in response to the first message, where the first response message includes response information of the access authentication information; and sending, by the access network element, the response information of the access authentication information to the terminal device based on the first response message. The method in this embodiment of this application can resolve a problem that different transmission protocols of network element authentication information do not adapt to each other.

In a first possible implementation of the first aspect, the first message is a non-access stratum NAS message or an N2 interface message, and the N2 interface is an interface between the access network element and the access management network element.

In a second possible implementation of the first aspect, the first response message includes indication information, and the indication information is used to indicate that the first response message is used for access authentication; and the sending, by the access network element, the response information of the access authentication information to the terminal device based on the first response message includes: extracting, by the access network element, the response information of the access authentication information from the first response message based on the indication information; and sending, by the access network element, the response information of the access authentication information to the terminal device.

With reference to the second possible implementation of the first aspect, in a third possible implementation of the first aspect, the indication information is an access authentication indication or a message type.

In any possible implementation of the first aspect, the method further includes: sending, by the access network element, address information of the access network element to the terminal device.

According to a second aspect of this application, an authentication method is provided. The method includes: obtaining, by a terminal device, address information of an access network element that is used for access authentication; and selecting, by the terminal device, the access network element corresponding to the address information to initiate a tunnel authentication procedure. In this embodiment, the terminal device selects the access network element in an access authentication process to initiate the tunnel authentication procedure, so that the access authentication procedure and the tunnel authentication procedure can be simplified.

In a first possible implementation of the second aspect, the obtaining, by a terminal device, address information of an access network element that is used for access authentication includes: receiving, by the terminal device in an access authentication process, the address information of the access network element that is from the access network element.

In a second possible implementation of the second aspect, the obtaining, by a terminal device, address information of an access network element that is used for access authentication includes: sending, by the terminal device to a domain name system DNS, identification information of a public land mobile network PLMN in which the terminal device is located; and receiving, by the terminal device, the address information of the access network element that is from the domain name system based on the identification information of the PLMN

In any possible implementation of the second aspect, before the selecting, by the terminal device, the access network element corresponding to the address information to initiate a tunnel authentication procedure, the method further includes: initiating, by the terminal device, the access authentication procedure to the access network element corresponding to the address information.

According to a third aspect of this application, an authentication method is provided. The method includes: receiving, by an access node, connection establishment information from a terminal device, where the connection establishment information is used to establish a connection between the terminal device and the access node; allocating, by the access node, address information to the terminal device, where the address information is used to perform an authentication process; receiving, by the access node, authentication process result information from an access gateway, where the authentication process result information includes access authentication result information; and determining, by the access node, validity of the address information of the terminal device based on the access authentication result information. In this embodiment of this application, access authentication and tunnel authentication are simultaneously performed, thereby simplifying an authentication procedure.

In a first possible implementation of the third aspect, the access authentication result information is access authentication success information, and the determining, by the access node, validity of the address information of the terminal device based on the access authentication result information includes: determining, by the access node based on the access authentication success information, that the address information of the terminal device is valid.

In a second possible implementation of the third aspect, the access authentication result information is access authentication failure information, and the determining, by the access node, validity of the address information of the terminal device based on the access authentication result information includes: determining, by the access node based on the access authentication failure information, that the address information of the terminal device is invalid.

According to a fourth aspect of this application, an authentication method is provided. The method includes: obtaining, by a terminal device, address information of the terminal device; sending, by the terminal device, tunnel authentication information to an access gateway, where the tunnel authentication information includes the address information of the terminal device; receiving, by the terminal device, response information from the access gateway in response to the tunnel authentication information, where the response information of the tunnel authentication information includes access authentication result information; and determining, by the terminal device, validity of the address information of the terminal device based on the access authentication result information.

In a first possible implementation of the fourth aspect, the access authentication result information is access authentication success information, and the determining, by the terminal device, validity of the address information of the terminal device based on the access authentication result information includes: determining, by the terminal device based on the access authentication success information, that the address information of the terminal device is valid.

In a second possible implementation of the fourth aspect, the access authentication result information is access authentication failure information, and the determining, by the terminal device, validity of the address information of the terminal device based on the access authentication result information includes: determining, by the terminal device based on the access authentication failure information, that the address information of the terminal device is invalid.

In any possible implementation of the fourth aspect, the obtaining, by a terminal device, address information of the terminal device includes: receiving, by the terminal device, the address information that is of the terminal device and that is from an access node.

According to a fifth aspect of this application, an authentication method is provided. The method includes: receiving, by an access gateway, tunnel authentication information from a terminal device, where the tunnel authentication information includes address information allocated by an access node to the terminal device; sending, by the access gateway, the tunnel authentication information to an access management network element; receiving, by the access gateway, response information of the tunnel authentication information from the access management network element, where the response information of the tunnel authentication information includes access authentication result information; and sending, by the access gateway, the response information of the tunnel authentication information to the terminal device.

According to a sixth aspect of this application, an authentication apparatus is provided. The authentication apparatus includes a processing unit and a transceiver unit, where the transceiver unit is configured to receive access authentication information from a terminal device; the processing unit is configured to generate a first message based on the access authentication information, where the first message includes the access authentication information; the transceiver unit is further configured to: send the first message to an access management network element, and receive a first response message from the access management network element in response to the first message, where the first response message includes response information of the access authentication information; and the transceiver unit is further configured to send the response information of the access authentication information to the terminal device based on the first response message.

According to a seventh aspect of this application, an authentication apparatus is provided. The authentication apparatus includes a processing unit and a transceiver unit, where the transceiver unit is configured to obtain address information of an access network element that is used for access authentication; and the processing unit is configured to select the access network element corresponding to the address information to initiate a tunnel authentication procedure.

According to an eighth aspect of this application, an authentication apparatus is provided. The authentication apparatus includes a processing unit and a transceiver unit, where the transceiver unit is configured to receive connection establishment information from a terminal device, where the connection establishment information is used to establish a connection between the terminal device and the access node; the processing unit is configured to allocate address information to the terminal device, where the address information is used to perform an authentication process; the transceiver unit is further configured to receive authentication process result information from an access gateway, where the authentication process result information includes access authentication result information; and the processing unit is further configured to determine validity of the address information of the terminal device based on the access authentication result information.

According to a ninth aspect of this application, an authentication apparatus is provided. The authentication apparatus includes a processing unit and a transceiver unit, where the transceiver unit is configured to obtain address information of an access network element that is used for access authentication; the transceiver unit is further configured to send tunnel authentication information to an access gateway, where the tunnel authentication information includes the address information of the authentication apparatus; the transceiver unit is further configured to receive response information from the access gateway in response to the tunnel authentication information, where the response information of the tunnel authentication information includes access authentication result information; and the processing unit is configured to determine validity of the address information of the authentication apparatus based on the access authentication result information.

According to a tenth aspect of this application, an authentication apparatus is provided. The authentication apparatus includes a processing unit and a transceiver unit, where the processing unit is configured to receive, by using the transceiver unit, tunnel authentication information from a terminal device, where the tunnel authentication information includes address information allocated by an access node to the terminal device; the processing unit is further configured to send, by using the transceiver unit, the tunnel authentication information to an access management network element; the processing unit is configured to receive, by using the transceiver unit, response information of the tunnel authentication information from the access management network element, where the response information of the tunnel authentication information includes access authentication result information; and the processing unit is configured to send, by using the transceiver unit, the response information of the tunnel authentication information to the terminal device.

According to an eleventh aspect, a computer storage medium is provided. The computer-readable storage medium stores an instruction, and when the instruction is run on a computer, the computer is enabled to perform the methods according to any one of the first aspect to the fifth aspect and the possible implementations.

According to a twelfth aspect of this application, a computer program product including an instruction is provided. When the computer program product is run on a computer, the computer is enabled to perform the methods according to any one of the first aspect to the fifth aspect and the possible implementations.

### BRIEF DESCRIPTION OF DRAWINGS

FIG. 1a is a schematic diagram of a communications system for implementing an embodiment of this application;
FIG. 1b is a schematic diagram of another communications system for implementing an embodiment of this application;
FIG. 2 is a schematic flowchart of a first embodiment of an authentication method according to this application;
FIG. 3 is a schematic flowchart of a second embodiment of an authentication method according to this application;
FIG. 4 is a schematic flowchart of a third embodiment of an authentication method according to this application;
FIG. 5A, FIG. 5B, and FIG. 5C are schematic flowcharts of a fourth embodiment of an authentication method according to this application;
FIG. 6A, FIG. 6B, and FIG. 6C are schematic flowcharts of a fifth embodiment of an authentication method according to this application;
FIG. 7A, FIG. 7B, and FIG. 7C are schematic flowcharts of a sixth embodiment of an authentication method according to this application;
FIG. 8A, FIG. 8B, and FIG. 8C are schematic flowcharts of a seventh embodiment of an authentication method according to this application;

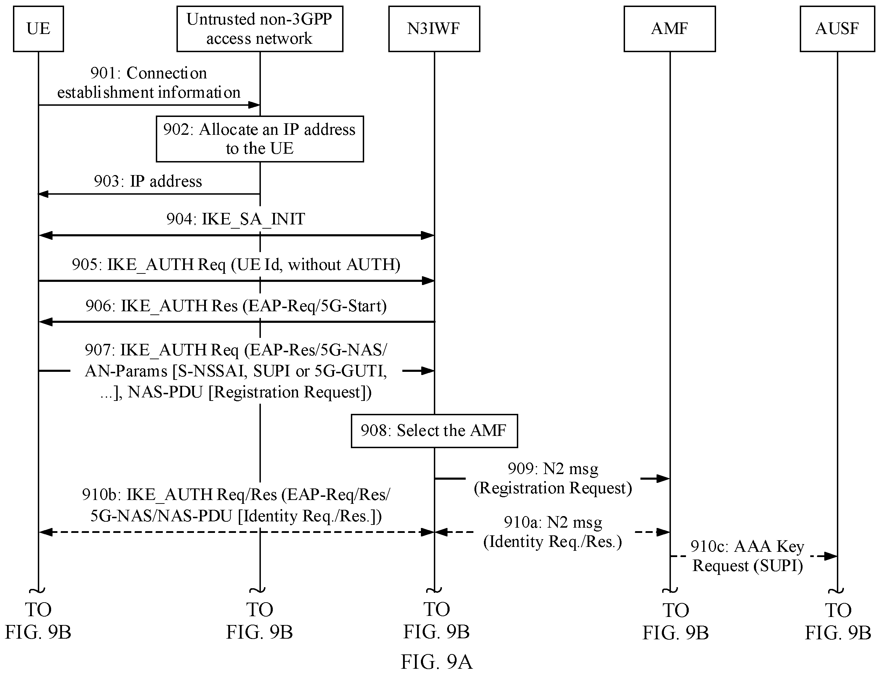

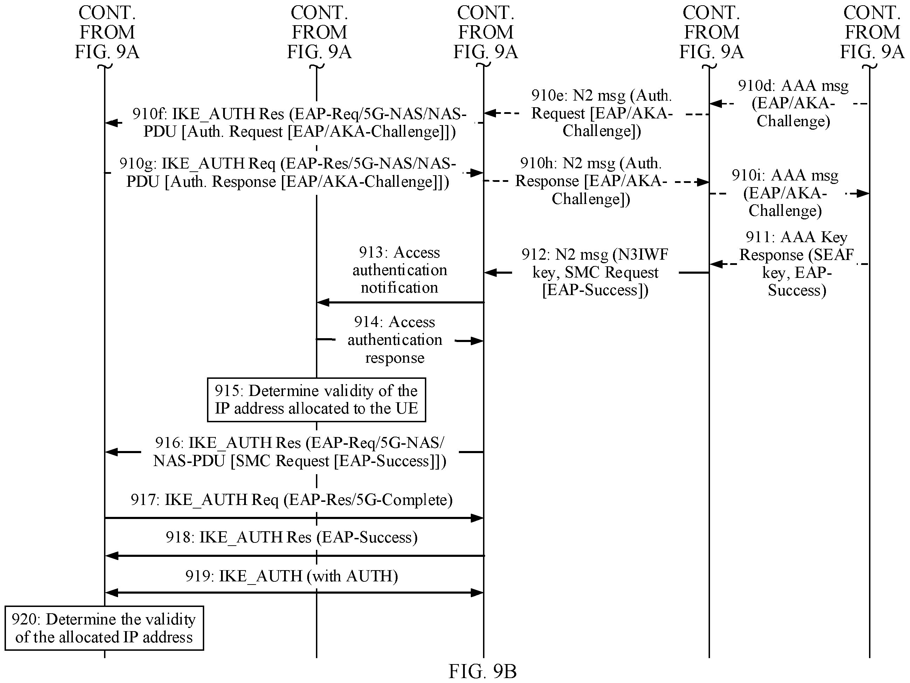

FIG. 9A and FIG. 9B are schematic flowcharts of an eighth embodiment of an authentication method according to this application; and
FIG. 10 is a schematic diagram of an authentication apparatus according to an embodiment of this application.

### DESCRIPTION OF EMBODIMENTS

Embodiments of this application may be applied to 5G or a next generation network, a fixed network, a home eNodeB network, an enterprise network, a MulteFire network, a mobile network accessed by a non-3GPP (for example, Wi-Fi), or the like.

In the embodiments of this application, a terminal device includes but is not limited to: user equipment (user equipment, UE), a subscriber unit, a subscriber station, a mobile station, a remote station, a remote terminal device, a mobile terminal device, a user terminal device, a terminal device, a wireless communications device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, a processing device connected to a wireless modem, a vehicle-mounted device, a wearable device, a terminal device in an internet of things, a household appliance, a virtual reality device, a terminal device in a 5G network, a terminal device in a future evolved public land mobile network (public land mobile network, PLMN), or the like. In the embodiments of this application, an example in which the terminal device is UE is used for description.

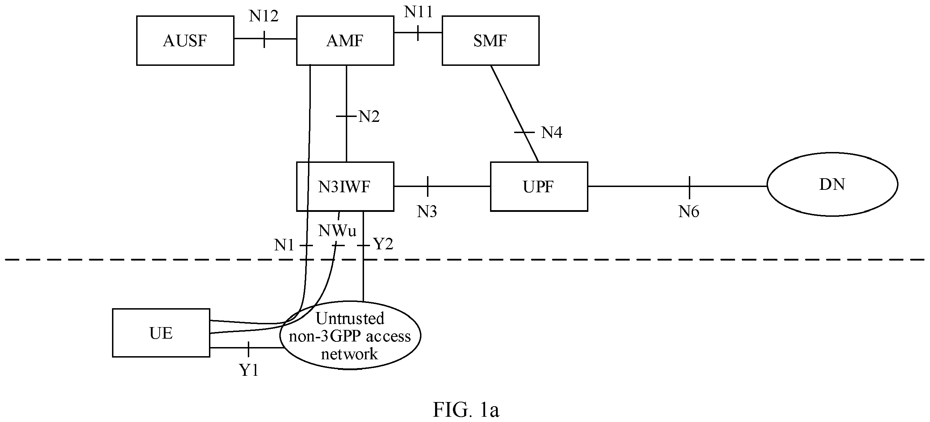

FIG. 1a is a schematic diagram of a communications system that can implement an embodiment of this application. In the communications system, UE accesses a core network (Core Network, CN) by using an untrusted (Untrusted) non-3GPP access network (access network, AN).

A core network element may include: a user plane function (user plane function, UPF) network element, an access and mobility management function (access and mobility management function, AMF) network element, a session management function (session management function, SMF) network element, and an authentication server function (authentication server function, AUSF) network element. By using the untrusted non-3GPP access network, a non-3GPP interworking function (non-3GPP Interworking Function, N3IWF) network element and the user plane function network element may transmit user plane data between the UE and a data network (Data Network, DN). The N3IWF network element may be a gateway for the untrusted non-3GPP access network to access the core network. The N3IWF network element may be an independent network element, and the N3IWF network element may alternatively be disposed in an access network device or a core network element. This is not limited herein. The AMF network element is configured to perform mobility management, lawful interception, access authorization, authentication, or the like. The SMF network element is configured to implement session and bearer management, address allocation, and the like. The AUSF network element is configured to authenticate the UE. In this embodiment, communication connection to the network elements may be implemented by using an interface shown in FIG. 1a.

It may be understood that, in the communications system shown in FIG. 1a, functions and interfaces of the network elements are merely examples. When the network elements are applied to this embodiment of this application, not all functions are necessary. All or some network elements of the core network element may be physical entity network elements, or may be virtualized network elements. This is not limited herein.

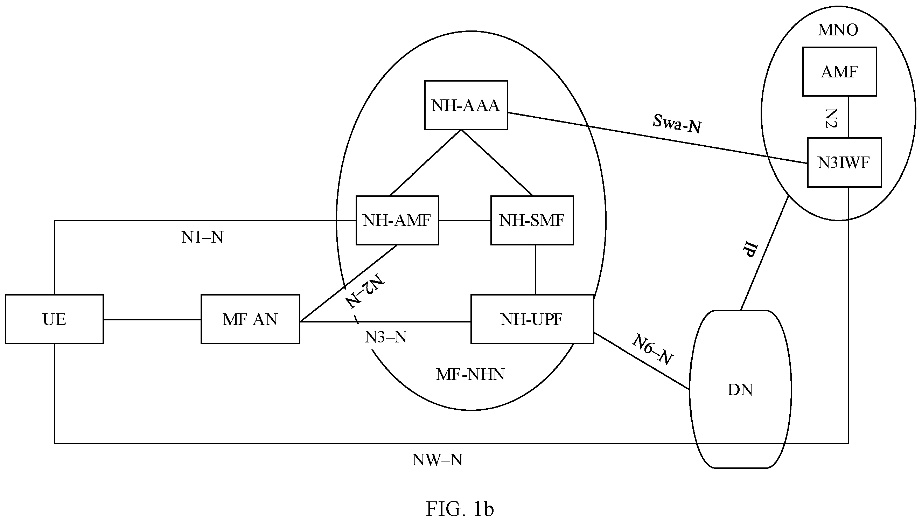

FIG. 1b is a schematic diagram of another communications system that can implement an embodiment of this application. In the communications system, UE accesses a mobile network operator (Mobile Network Operator, MNO) network by using a 5G MulteFire (MF) network.

The UE accesses a MulteFire core network by using a MulteFire access network (MF AN). The MulteFire core network may also be referred to as a neutral host (Neutral Host, NH) core network. A MulteFire core network element includes an NH-UPF network element, an NH-AMF network element, an NH-SMF network element, and a neutral host authentication, authorization, and accounting (Neutral Host Authentication, Authorization, Accounting, NH-AAA) network element. Functions of the NH-UPF network element, the NH-AMF network element, the NH-SMF network element, and the NH-AAA network element are similar to functions of corresponding network elements in an operator network, and details are not described herein again. An MNO network includes an N3IWF network element and an AMF network element. In this embodiment, communication connection to the network elements may be implemented by using an interface shown in FIG. 1b. It may be understood that, in the communications system shown in FIG. 1b, functions and interfaces of the network elements are merely examples. When the network elements are applied to this embodiment of this application, not all functions are necessary. All or some network elements of the core network element may be physical entity network elements, or may be virtualized network elements. This is not limited herein.

In this embodiment of this application, access authentication is to authenticate whether the UE can access an access network, for example, authenticate whether the UE can access a Wi-Fi network. Tunnel authentication is to authenticate whether the UE can access a core network by using a tunnel technology.

In this embodiment of this application, "and/or" describes only an association relationship for describing associated objects and represents that three relationships may exist. For example, A and/or B may represent the following cases: Only A exists, both A and B exist, and only B exists. In addition, in the descriptions of this application, "a plurality of' means two or more than two.

In this embodiment of this application, that a network element (for example, a network element A) obtains information from another network element (for example, a network element B) may be that the network element A directly receives the information from the network element B, or may be that the network element A receives the information from the network element B by using another network element (for example, a network element C). When the network element A receives the information from the network element B by using the network element C, the network element C may transparently transmit the information, or may process the information, for example, add the information to different messages for transmission, or extract the information and send only the extracted information to the network element A. Similarly, in various embodiments of this application, that the network element A sends information to the network element B may be that the network element A directly sends the information to the network element B, or may be that the network element A sends the information to the network element B by using another network element (for example, the network element C).

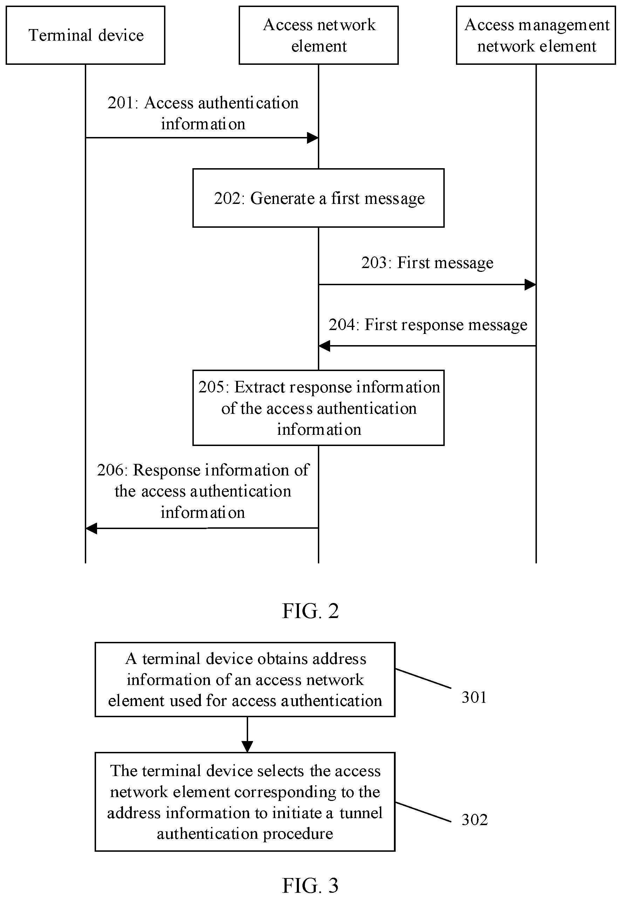

FIG. 2 is a schematic flowchart of a first embodiment of an authentication method according to this application. The method in this embodiment may be applied to the systems shown in FIG. 1a and FIG. 1b, or may be applied to another communications system, for example, a communications system in which UE accesses an operator network by using a wired transmission network (a fixed network) or a trusted non-3GPP access network. This is not limited herein. Specifically, the authentication method includes the following steps.

Step 201: A terminal device sends access authentication information to an access network element.

The terminal device may be the UE in FIG. 1a and FIG. 1b. When the method in this embodiment is applied to the untrusted non-3GPP access network or a MulteFire network, the access network element may be the N3IWF network element in FIG. 1a and FIG. 1b. In a possible implementation, when the method in this embodiment is applied to the wired transmission network, the access network element may be a broadband network gateway (Broadband Network Gateway, BNG), a fixed mobile interworking function (Fixed Mobile Interworking Function) network element, an access gateway function (Access Gateway Function) network element, or a wired access node (Wireline Access Node). In another possible implementation, when the method in this embodiment is applied to a trusted non-3GPP access network or a wired transmission network, the access network element may be an access node, for example, a base station device or a trusted WLAN access node. This is not limited herein.

Correspondingly, the access authentication information may be extensible authentication protocol (extensible authentication protocol, EAP) information, or may be point-to-point protocol (Point to Point Protocol, PPP) information, for example, point-to-point protocol over ethernet (Point to Point Protocol over Ethernet, PPPoE) information. The access authentication information may alternatively be an 802.1X authentication message or a web page authentication message.

Step 202: The access network element generates a first message based on the received access authentication information.

In an existing 5G communications network, an access management network element (for example, an AMF network element) can receive only authentication information transmitted by a non-access stratum (non-access stratum, NAS), which does not adapt to a transmission protocol of conventional authentication information. Therefore, in this step, the access network element generates the first message based on the received access authentication information. The first message includes the access authentication information received in step 201.

The first message may be a NAS message. The NAS message may be a NAS message specially used to transmit access authentication information, or may be an existing NAS message. This is not limited herein. The NAS message may include indication information. The indication information is used to indicate that the first message is used for access authentication. The indication information may be an access authentication indication or a message type.

Specifically, when the first message is a NAS message specially used to transmit access authentication information, header information of the NAS message includes a message type (message type). The message type may be access authentication, and is used to indicate that the NAS message is used for access authentication. For example, the NAS message may use header information shown in Table 1.

**Table 1**

| Security header (0) | Protocol discriminator (0b0010-EMM) |
|---|---|
| Message Type (access authentication) | |
| Other information element as required (mobile identity, device properties, and the like) | |

When the first message is an existing NAS message (for example, an attach request message), the header information of the NAS message includes an access authentication indication (Access Authentication Indication). For example, an access authentication indication is added to header information of an attach request (attach request) message, as shown in Table 2.

**Table 2**

| Security header (0) | Protocol discriminator (0b0010-EMM) |
|---|---|
| Message Type (attach request) | |
| Other information element as required (access authentication indication, mobile identity, device properties, and the like) | |

The first message may be an N2 interface message, and is referred to as an N2 message for short in the embodiments of this application. Specifically, in a 3GPP protocol, the N2 interface may be an N2-AP. The N2 message may be an N2 message specially used to transmit access authentication information, or may be an existing N2 message. This is not limited herein. The N2 message may include indication information. The indication information is used to indicate that the first message is used for access authentication. The indication information may be an access authentication indication or a message type.

Specifically, when the first message is an N2 message specially used to transmit access authentication information, header information of the N2 message includes a message type (message type). The message type may be access authentication, and is used to indicate that the N2 message is used for access authentication. For example, the N2 message may use header information shown in Table 3.

**Table 3**

| IE/Group Name | Presence |
|---|---|
| Message Type (access authentication) | M |
| AMF UE NGAP ID | M |
| gNB UE NGAP ID | M |
| EAP payload | M |

When the first message is an existing N2 message, header information of the N2 message includes an access authentication indication (Access Authentication Indication), as shown in Table 4.

**Table 4**

| IE/Group Name | Presence |
|---|---|
| Message Type | M |
| AMF UE NGAP ID | M |
| gNB UE NGAP ID | M |
| Access Authentication Indication | |
| EAP payload | M |

In a possible implementation, the access network element may add the received access authentication information to a payload (payload) of the first message. The access authentication information may be EAP-RSP/Identity or EAP-RSP/AKA'-Challenge. For details, refer to the prior art, and details are not described herein.

Step 203: The access network element sends the generated first message to the access management network element.

The access management network element may be the AMF network element in FIG. 1a and FIG. 1b. The first message is used for access authentication.

The access management network element may learn, based on the indication information in the first message, that the message is used for access authentication. The access management network element may authenticatie an AUSF network element based on the access authentication information in the received first message, and receive response information from the AUSF network element in response to the access authentication information. For a procedure in which the access management network element authenticates the AUSF network element, refer to descriptions in the prior art, and details are not described herein.

Step 204: The access management network element sends a first response message for the first message to the access network element.

The first response message includes response information of the access authentication information. The response information of the access authentication information may be EAP-RQ/AKA'-Challenge, or may be EAP-Success/MSK. For details, refer to the prior art, and details are not described herein.

The access management network element may generate the first response message based on the response information of the received access authentication information. The first response message may be a NAS message. The NAS message may be a NAS message specially used to transmit access authentication information, or may be an existing NAS message. The NAS message may include indication information. The indication information is used to indicate that the first message is used for access authentication. The indication information may be an access authentication indication or a message type. For details, refer to the descriptions in step 202. Alternatively, the first response message may be an N2 message. The N2 message may be an N2 message specially used to transmit access authentication information, or may be an existing N2 message. This is not limited herein. The N2 message may include indication information. The indication information is used to indicate that the first response message is used for access authentication. The indication information may be an access authentication indication or a message type. For details, refer to the descriptions in step 202.

The first response message carries the response information of the access authentication information.

Step 205: The access network element extracts the response information of the access authentication information from the first response message.

After receiving the first response message, the access network element extracts the response information of the access authentication information from the first response message.

Specifically, the access network element extracts the response information of the access authentication information based on the indication information carried in the first response message. For example, if a type of the first response message is access authentication or the first response message carries the access authentication indication, the access network element deletes header information of the first response message, to obtain the response information of the access authentication information.

Step 206: The access network element sends the response information of the access authentication information to the terminal device.

The access network element sends the extracted response information of the access authentication information to the terminal device.

In this embodiment of this application, in an access authentication process, the access network element receives the access authentication information from the terminal device, and generates, based on the access authentication information, the first message used for the access authentication, to resolve a prior-art problem that different transmission protocols of network element authentication information do not adapt to each other.

In a possible implementation, the response information of the access authentication information that is from the access network element to the terminal device may include address information of the access network element. The address information may be an internet protocol (Internet Protocol, IP) address of the access network element. In a tunnel authentication process, the terminal device selects the access network element corresponding to the address information to initiate a tunnel authentication procedure. Certainly, the access network element may alternatively add the address information of the access network element to another message. This is not limited herein.

In the communications system in FIG. 1a, in an access authentication process, a corresponding N3IWF network element is selected by in untrusted non-3GPP access network to perform access authentication. In the communications system in FIG. 1b, in an access authentication process, a corresponding N3IWF network element is selected by the NH-AAA network element to perform access authentication. However, after the access authentication ends, the UE selects an N3IWF network element to perform tunnel authentication. In the two authentication processes, because different network elements may select different N3IWF network elements, system complexity is increased. For example, an AMF network element needs to record two different N3IWF network elements.

FIG. 3 is a schematic flowchart of a second embodiment of an authentication method according to this application. The method in this embodiment may be applied to the systems shown in FIG. 1a and FIG. 1b, or may be applied to another communications system, for example, a communications system in which UE accesses an operator network by using a fixed network. This is not limited herein. Specifically, the authentication method includes the following steps.

Step 301: A terminal device obtains address information of an access network element that is used for access authentication.

In a possible implementation, the terminal device may obtain the address information of the access network element before the access authentication. For example, the terminal device sends, to a domain name system (Domain Name System, DNS), identification information of a public land mobile network (Public Land Mobile Network, PLMN) in which the terminal device is located. The terminal device receives the address information of the access network element that is from the domain name system based on the identification information of the PLMN. When the terminal device receives address information that corresponds to a plurality of access network elements and that is from the domain name system, the terminal device may select one access network element from the plurality of access network elements. For a procedure in which the terminal device selects the access network element, refer to the prior art. After obtaining the address information of the access network element, the terminal device may carry the address information of the access network element to a process of initiating the access authentication, to select the access network element corresponding to the address information to perform the access authentication.

In another possible implementation, the terminal device may obtain the address information of the access network element in the access authentication process. Specifically, in the access authentication process, after the access network element used for the access authentication is determined, the access network element sends the address information of the access network element to the terminal device. For example, response information that is of access authentication information that is from the access network element to the terminal device may include the address information of the access network element. For details, refer to the descriptions in the embodiment in FIG. 2. For another example, in the system shown in FIG. 1a, after the untrusted non-3GPP access network selects the N3IWF network element used for the access authentication, the untrusted non-3GPP access network sends the address information of the selected N3IWF network element to the terminal device. Alternatively, in the system shown in FIG. 1b, after the NH-AAA network element selects the N3IWF network element used for the access authentication, the NH-AAA network element sends the address information of the selected N3IWF network element to the terminal device.

Step 302: The terminal device selects the access network element corresponding to the received address information to initiate a tunnel authentication procedure.

For a specific procedure in which the terminal device initiates tunnel authentication, refer to the prior art, and details are not described herein again.

In this embodiment of this application, the access network element sends the address information of the access network element to the terminal device. In a tunnel authentication process, the terminal device selects the access network element corresponding to the address information to initiate the tunnel authentication process, to avoid a problem that different access network elements are selected in two authentication processes, thereby simplifying system complexity.

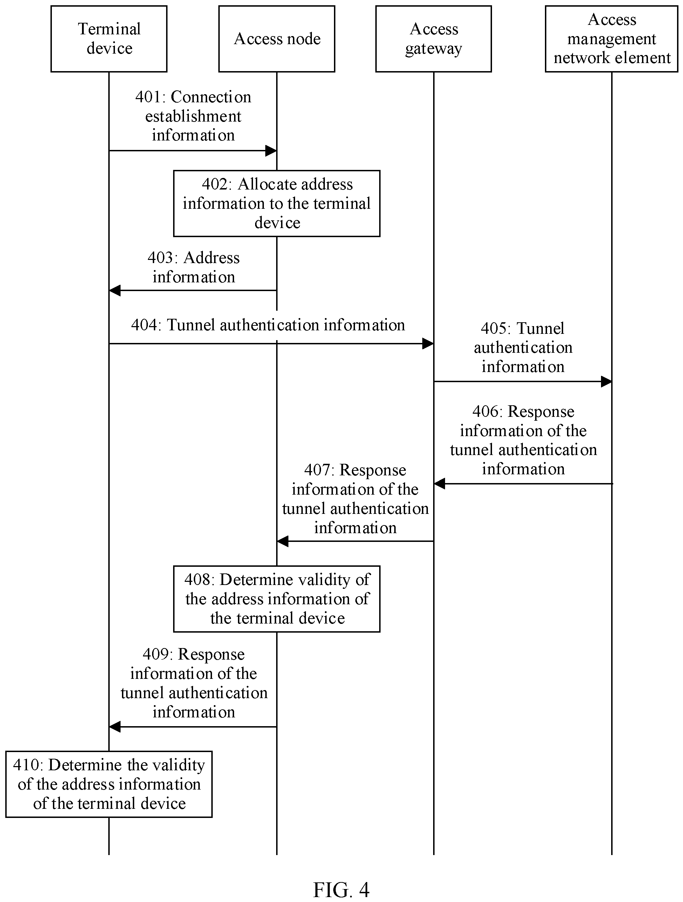

FIG. 4 is a schematic flowchart of a third embodiment of an authentication method according to this application. The method in this embodiment may be applied to the systems shown in FIG. 1a and FIG. 1b, or may be applied to another communications system, for example, a communications system in which UE accesses an operator network by using a fixed network. This is not limited herein. Specifically, the authentication method includes the following steps.

Step 401: A terminal device sends connection establishment information to an access node. The connection establishment information is used to establish a connection between the terminal device and the access node.

In this embodiment of this application, the access node may be an access network device. The access node may provide communication coverage for a specific geographical area, and may communicate with a terminal device located in the coverage area (cell). The access node may communicate with any quantity of terminal devices. There may be a plurality of air interface connections between the access node and the terminal device. For example, there are two air interface connections between the access node and the terminal device, and the two air interface connections are respectively used to transmit a data stream A and a data stream B. The access node may support communication protocols of different standards, or may support different communication modes. For example, the access node may be an evolved NodeB (evolved node B, eNodeB), a wireless fidelity access point (wireless fidelity access point, WiFi AP), a worldwide interoperability for microwave access base station (worldwide interoperability for microwave access base station, WiMAX BS), a radio controller in a cloud radio access network (cloud radio access network, CRAN), an access device in a fixed access network, an access device in a 5G network, an access device in a future evolved PLMN, or the like.

In this embodiment, when the method is applied to a trusted non-3GPP network or an untrusted non-3GPP network, the connection establishment message may be a wireless local area network (Wireless Local Area Network, WLAN) connection establishment message. When the method is applied to a Multefire network, the connection establishment message may be an attach request message. When the method is applied to a fixed network, the connection establishment message may be a PPP connection message.

Step 402: The access node allocates address information to the terminal device.

After receiving the connection establishment information from the terminal device, the access node allocates the address information to the terminal device. Optionally, the address information may be temporary address information. The address information may be an IP address. The address information is used to perform an authentication process.

The terminal device may access an access network and a core network by using the address information.

Step 403: The access node sends the allocated address information to the terminal device.

In this embodiment of this application, for a specific method for obtaining, by the terminal device, the address information of the terminal device by using step 401, step 402, and step 403, refer to the prior art.

Step 404: The terminal device sends tunnel authentication information to an access gateway.

The tunnel authentication information includes the address information allocated by the access node to the terminal device. The tunnel authentication information may further include identification information of the terminal device.

In this embodiment of this application, when the method in this embodiment is applied to an untrusted non-3GPP network, the access gateway may be the N3IWF network element in FIG. 1a, and the access node may be the untrusted non-3GPP access network in FIG. 1a. When the method in this embodiment is applied to a trusted non-3GPP network or a fixed network, the access gateway may be disposed in the access node, that is, the access network element may also be the access node. This is not limited herein.

Step 405: The access gateway sends the tunnel authentication information to an access management network element.

After receiving the tunnel authentication information from the terminal device, the access gateway sends the tunnel authentication information to the access management network element.

In a possible implementation, the access gateway extracts the tunnel authentication information from a message from the terminal device, and then sends the extracted tunnel authentication information to the access management network element.

Step 406: The access management network element sends response information of the tunnel authentication information to the access gateway.

After receiving the tunnel authentication information from the access gateway, the access management network element may send information related to tunnel authentication to an AUSF network element. The AUSF network element completes authentication on the terminal device. Specifically, the AUSF network element may perform tunnel authentication and the access authentication for the terminal device based on user identification information in the tunnel authentication information. The AUSF network element sends the response information of the tunnel authentication information to the access management network element. The response information of the tunnel authentication information includes access authentication result information. The response information of the tunnel authentication information may further include tunnel authentication result information. In this embodiment of this application, the response information of the tunnel authentication information may also be referred to as authentication process result information. The response information that is of the tunnel authentication information and that is from the AUSF network element to the access management network element may be added to an AAA message.

The access management network element receives the authentication process result information from the AUSF network element. The authentication process result information includes the access authentication result information.

In a possible implementation, the response information of the tunnel authentication information may alternatively be the tunnel authentication result information, and the tunnel authentication result information includes the access authentication result information. The access management network element sends the response information of the tunnel authentication information to the access gateway.

Specifically, the access management network element may extract the response information of the tunnel authentication information from a message from the AUSF network element, and then send the extracted response information of the tunnel authentication information to the access gateway.

In a possible implementation, the access authentication result information may not be added to the response information of the tunnel authentication information, but is sent to the access gateway by using another message. This is not limited herein.

Step 407: The access gateway sends the response information of the tunnel authentication information to the access node.

After receiving the response information of the tunnel authentication information from the access management network element, the access gateway may send the response information of the tunnel authentication information to the access node.

Specifically, the access gateway may extract the response information of the tunnel authentication information from a message from the access management network element, and then send the extracted response information of the tunnel authentication information to the access node. Alternatively, the access gateway may add the response information of the tunnel authentication information to another message and send the another message to the access node. This is not limited herein.

Step 408: The access node determines validity of the address information of the terminal device based on the access authentication result information.

Specifically, the access node determines the validity of the address information of the terminal device based on the access authentication result information added to the response information of the tunnel authentication information.

The access authentication result information may be access authentication success information or access authentication failure information.

When the access authentication result information is the access authentication success information, the access node determines that the address information allocated to the terminal device is valid, and the access node allows the terminal device to continue to use the address information to access a network. When the access authentication result information is the access authentication failure information, the access node determines that the address information allocated to the terminal device is invalid, and the access node prohibits the terminal device from continuing to use the address information to access the network.

Step 409: The access node sends the response information of the tunnel authentication information to the terminal device.

In this embodiment, a sequence of performing step 408 and step 409 is not limited. Alternatively, step 409 may be performed before step 408.

Step 410: The terminal device determines the validity of the address information of the terminal device based on the access authentication result information.

Specifically, the terminal device determines the validity of the address information of the terminal device based on the access authentication result information added to the response information of the tunnel authentication information.

The access authentication result information may be the access authentication success information or the access authentication failure information.

When the access authentication result information is the access authentication success information, the terminal device determines that the address information allocated by the access node is valid, and the terminal device continues to use the address information to access the network. When the access authentication result information is the access authentication failure information, the terminal device determines that the address information allocated by the access node is invalid, and the terminal device stops using the address information to access the network.

In a possible implementation of this embodiment, after the terminal device obtains the address information allocated by the access node, the terminal device adds the address information to a packet of an authentication message as a data source address.

In this embodiment, for a procedure of step 404, step 405, step 406, step 407, and step 409 of the tunnel authentication, refer to an existing tunnel authentication procedure.

In this embodiment, the access node pre-allocates the address information to the terminal device, and performs the authentication process by using the address information. Because the tunnel authentication and the access authentication are performed simultaneously, the authentication process is simplified.

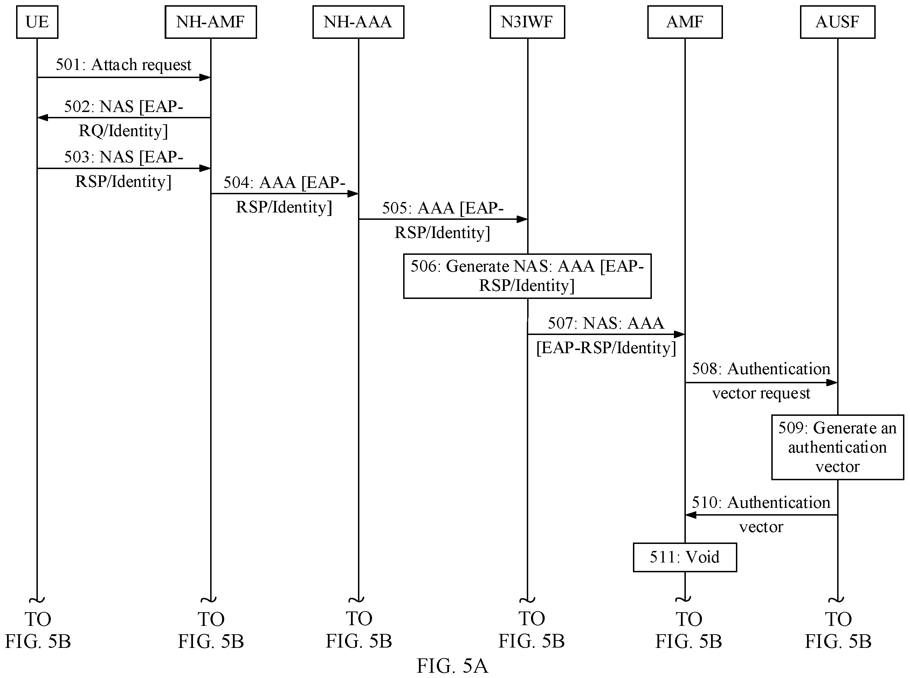

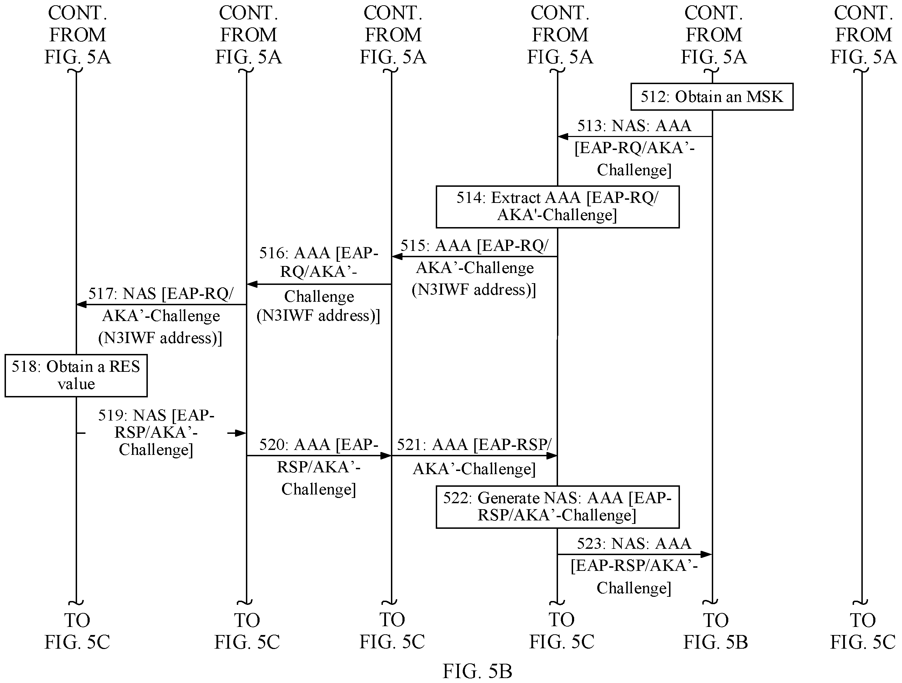

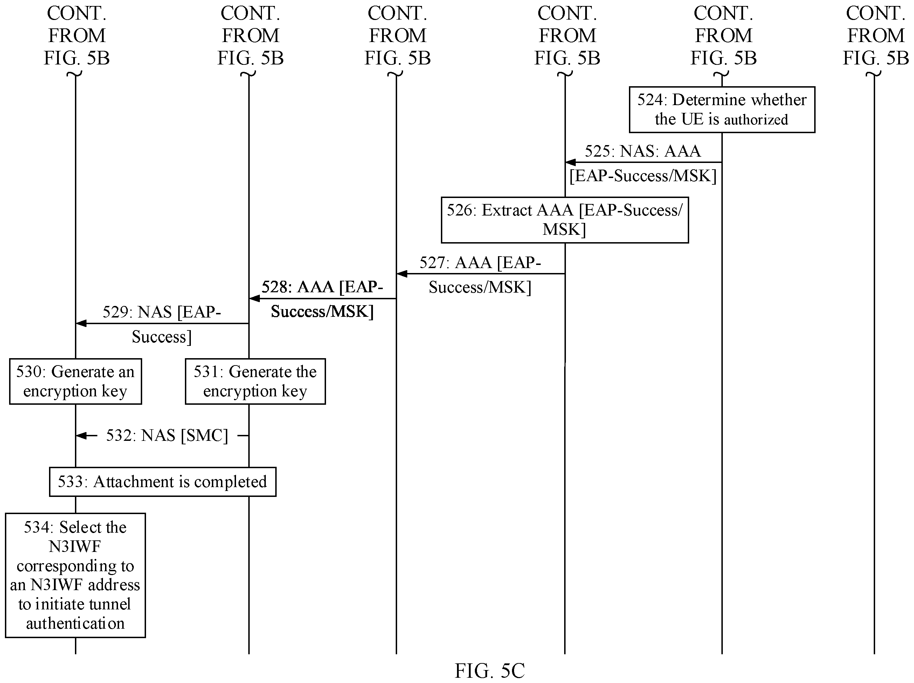

FIG. 5A, FIG. 5B, AND FIG. 5C are schematic flowcharts of a fourth embodiment of an authentication method according to this application. The method in this embodiment is described in detail based on the architecture in FIG. 1b.

Step 501: The UE sends an attach request to the NH-AMF network element.

In this step, the UE may alternatively send a registration request to the NH-AMF network element.

Step 502: The NH-AMF network element sends EAP-RQ/Identity information to the UE by using a NAS message.

The message is an EAP request message, and is used to initiate an EAP access authentication procedure. The message is further used to request a UE ID from the UE.

Step 503: The UE sends EAP-RSP/Identity information to the NH-AMF network element by using a NAS message.

The message is an EAP response message. The message carries the UE ID.

Step 504 and step 505: The NH-AMF network element sends the EAP-RSP/Identity information to the N3IWF network element by using the NH-AAA network element.

Specifically, the NH-AMF network element may extract the EAP-RSP/Identity information from the NAS message, and then send the information to the NH-AAA network element by using an AAA message. The NH-AAA network element sends the AAA message to the N3IWF network element, to send the UE ID to the N3IWF network element.

Step 506: The N3IWF network element generates a NAS message used to transmit EAP information, adds the AAA message received in step 505 to the NAS message, and sends the NAS message to the AMF network element.

The NAS message includes indication information used to indicate that the NAS message is used for access authentication.

In another possible implementation, the N3IWF network element generates an N2 message used to transmit the EAP information, adds the AAA message received in step 505 to the N2 message, and sends the N2 message to the AMF network element.

The NAS message or the N2 message may be the first message in step 202. For details, refer to the descriptions in step 202.

Step 507: The N3IWF network element sends the generated NAS message to the AMF network element.

Step 508: The AMF network element requests an authentication vector from an AUSF network element based on the received NAS message.

The AMF network element may learn, based on the indication information in the NAS message, that the NAS message is used for access authentication. The AMF network element requests the authentication vector from the AUSF network element based on the access authentication information (EAP-RSP/Identity) in the NAS message.

For a process in which the AMF network element requests the authentication vector from the AUSF network element based on the access authentication information, refer to the prior art, and details are not described herein.

Step 509 to step 511: The AUSF generates the authentication vector, and sends the authentication vector to the AMF network element.

For a process in which the AUSF generates the authentication vector, refer to the prior art, and details are not described herein.

Step 512: The AMF network element obtains a master security key (master security key, MSK) based on the received authentication vector.

For a method for obtaining the MSK by the AMF network element based on the authentication vector, refer to the prior art, and details are not described herein.

Step 513: The AMF generates a NAS message used to transmit the EAP information, and sends the NAS message to the N3IWF network element.

The NAS message includes the indication information used to indicate that the NAS message is used for access authentication.

Specifically, the NAS message includes the AAA message, and the AAA message includes challenge (EAP-RQ/AKA'-Challenge) request information.

In another possible implementation, the AMF generates an N2 message used to transmit the EAP information, and adds the challenge request information to the N2 message, and sends the N2 message to the N3IWF network element.

The NAS message or the N2 message may be the first response message in step 204. For details, refer to the descriptions in step 204, and details are not described herein again.

Step 514: The N3IWF network element extracts the AAA message from the NAS message.

Specifically, the N3IWF network element may identify, based on the indication information in the NAS message, that the received NAS message is used for access authentication. The N3IWF network element may delete header information of the NAS message, to obtain the challenge request information in the NAS message. The challenge request information may be considered as the response information of the authentication information in step 205. For details of this step, refer to the descriptions in step 205, and details are not described herein.

In another possible implementation, the N3IWF network element may alternatively extract the AAA message from the N2 message.

Step 515 and step 516: The N3IWF network element sends the challenge request information to the NH-AMF network element by using the NH-AAA network element.

For details of the steps in which the N3IWF network element sends the challenge request information to the NH-AMF network element, refer to the prior art, and details are not described herein.

In a possible implementation, the N3IWF network element may further send an IP address of the N3IWF network element to the NH-AMF network element. Specifically, the AAA message from the N3IWF network element includes the challenge request information and the IP address of the N3IWF network element.

Step 517: The N3IWF network element sends the challenge request information to the UE.

The N3IWF network element may extract the challenge request information from the received AAA message, then add the challenge request information to a NAS message, and send the NAS message to the UE.

In a possible implementation, the N3IWF network element may extract the IP address of the N3IWF network element from the received AAA message, then add the IP address of the N3IWF network element to a NAS message, and send the NAS message to the UE.

Step 518: The UE obtains a RES value based on the received challenge request information.

For details of this step, refer to the prior art, and details are not described herein.

Step 519 to step 521: The UE sends challenge response information to the N3IWF network element.

For a procedure in which the UE sends the challenge response information (EAP-RSP/AKA'-Challenge) to the N3IWF network element, refer to the prior art, and details are not described herein.

Step 522: The N3IWF network element generates a NAS message used to transmit the EAP information, adds an AAA message received in step 521 to the NAS message, and sends the NAS message to the AMF network element.

The NAS message includes the indication information used to indicate that the NAS message is used for access authentication.

In another possible implementation, the N3IWF network element generates an N2 message used to transmit the EAP information, adds an AAA message received in step 521 to the N2 message, and sends the N2 message to the AMF network element.

The AAA message carries the challenge response information.

A method for generating the NAS message or the N2 message in this step is similar to the method for generating the NAS message or the N2 message in step 506. For details, refer to the descriptions in step 506, and details are not described herein again.

Step 523: The N3IWF network element sends the generated NAS message to the AMF network element.

Step 524: The AMF network element determines whether the UE is authorized.

After receiving the NAS message from the N3IWF network element, the AMF network element learns, based on the indication information in the NAS message, that the NAS message is used for access authentication. The AMF network element determines, based on the challenge response information in the NAS message, whether the UE is authorized. For a specific method for determining, by the AMF network element, whether the UE is authorized, refer to the prior art, and details are not described herein again.

Step 525: The AMF generates a NAS message used to transmit the EAP information, and sends the NAS message to the N3IWF network element.

The NAS message includes the indication information used to indicate that the NAS message is used for access authentication.

The NAS message further includes access authentication result information.

Specifically, the NAS message includes an AAA message, and the AAA message includes the access authentication result information (EAP-Success/MSK).

The access authentication result information may be considered as the response information of the access authentication information in step 205.

In another possible implementation, the AMF generates an N2 message used to transmit the EAP information, and adds the access authentication result information to the N2 message, and sends the N2 message to the N3IWF network element.

A method for generating the NAS message or the N2 message in this step is similar to the method for generating the NAS message or the N2 message in step 513. For details, refer to the descriptions in step 513, and details are not described herein again.

Step 526: The N3IWF network element extracts the AAA message from the NAS message.

Specifically, the N3IWF network element may identify, based on the indication information in the NAS message, that the received NAS message is used for access authentication. The N3IWF network element may delete header information of the NAS message, to obtain the access authentication result information in the NAS message. The access authentication result information may be considered as the response information of the authentication information in step 205. For details of this step, refer to the descriptions in step 205, and details are not described herein.

In another possible implementation, the N3IWF network element may alternatively extract the AAA message from the N2 message.

Step 527 and step 528: The N3IWF network element sends the access authentication result information to the NH-AMF network element by using the NH-AAA network element.

For details of the steps in which the N3IWF network element sends the access authentication result information to the NH-AMF network element, refer to the prior art, and details are not described herein.

In a possible implementation, the N3IWF network element may further send the IP address of the N3IWF network element to the NH-AMF network element. Specifically, the AAA message from the N3IWF network element includes the access authentication result information and the IP address of the N3IWF network element.

Step 529: The NH-AMF network element sends the access authentication result information to the UE.

The N3IWF network element may extract the access authentication result information from the received AAA message, then add the access authentication result information to the NAS message, and send the NAS message to the UE.

In a possible implementation, the N3IWF network element may extract the IP address of the N3IWF network element from the received AAA message, then add the IP address of the N3IWF network element to the NAS message, and send the NAS message to the UE.

In this embodiment of this application, when the IP address of the N3IWF network element is included in step 515 to step 517, the IP address of the N3IWF network element may not be included in step 527 to step 529. On the contrary, when the IP address of the N3IWF network element is not included in step 515 to step 517, the IP address of the N3IWF network element may be included in step 527 to step 529. Certainly, the IP address of the N3IWF network element may be included in both step 515 to step 517 and step 527 to step 529.

Step 530 to step 533: The UE and the NH-AMF network element complete a subsequent access authentication procedure, for example, generate an encryption key, based on the access authentication result information.

For details of the steps, refer to the prior art, and details are not described herein.

Step 534: The UE selects the N3IWF network element in the access authentication process to initiate a tunnel authentication procedure.

The UE selects the corresponding N3IWF network element based on the received IP address of the N3IWF network element, and then, initiates the tunnel authentication procedure to the selected N3IWF network element.

For a specific tunnel authentication process, refer to the prior art, and details are not described herein.

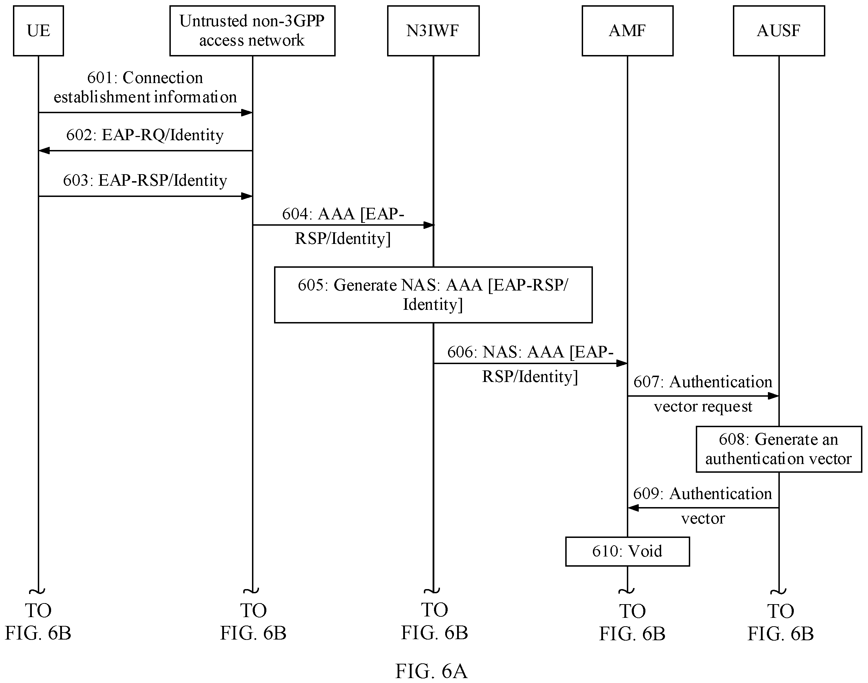

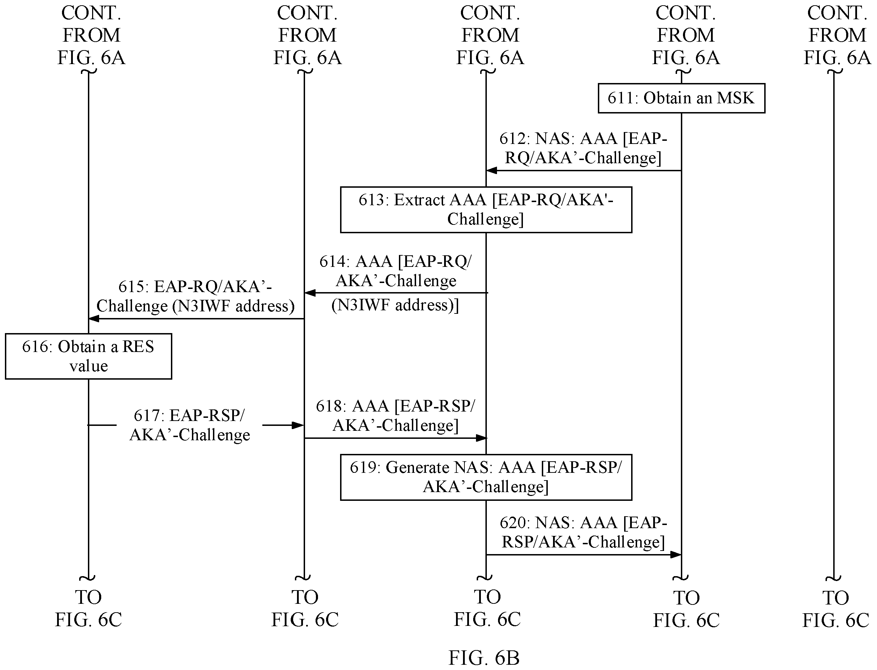

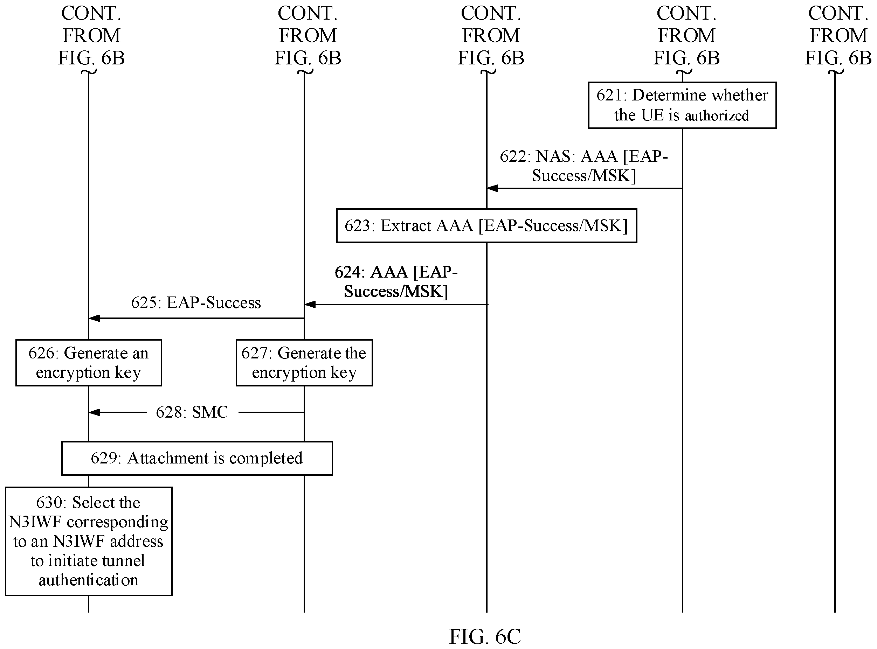

FIG. 6A, FIG. 6B, and FIG. 6C are schematic flowcharts of a fifth embodiment of an authentication method according to this application. The method in this embodiment is described in detail based on the architecture in FIG. 1a. In this embodiment, functions of the untrusted non-3GPP access network element are similar to those of the NH-AMF network element and the NH-AAA network element in the embodiment shown in FIG. 5A, FIG. 5B, and FIG. 5C. In this embodiment, the untrusted non-3GPP access network may be an access node. Specifically, the authentication method in this embodiment includes the following steps.

Step 601: The UE sends a connection establishment message to the untrusted non-3GPP access network.

Step 602: The untrusted non-3GPP access network sends EAP-RQ/Identity information to the UE.

The EAP-RQ/Identity information is used to initiate an EAP access authentication procedure. The information is further used to request a UE ID from the UE.

Step 603: The UE sends EAP-RSP/Identity information to the untrusted non-3GPP access network.

The EAP-RSP/Identity information is a response message of the EAP-RQ/Identity information. The information carries the UE ID.

Step 604: The untrusted non-3GPP access network sends an AAA message to an N3IWF network element.

The AAA message includes the EAP-RSP/Identity information.

For details of step 605 to step 614, refer to the descriptions of step 506 to step 515, and details are not described herein again.

Step 615: The untrusted non-3GPP access network sends challenge request information to the UE.

Specifically, the untrusted non-3GPP access network may extract the challenge request information from the received AAA message, and then send the challenge request information to the UE.

In a possible implementation, the untrusted non-3GPP access network may extract IP address information of the N3IWF network element from the received AAA message, and then send the IP address information of the N3IWF network element to the UE.

Step 616: The UE obtains a RES value based on the received challenge request information.

For details of this step, refer to the prior art, and details are not described herein again.

Step 617 and step 618: The UE sends challenge response information to a N3IWF network element.

For a specific procedure in which the UE sends the challenge response information to the N3IWF network element, refer to the prior art, and details are not described herein again.

For details of step 619 to step 623, refer to the descriptions of step 522 to step 526, and details are not described herein again.

Step 624: The N3IWF sends access authentication result information to the untrusted non-3GPP access network.

Specifically, the N3IWF sends the AAAmessage to the untrusted non-3GPP access network, and the AAA message includes the access authentication result information.

Step 625: The untrusted non-3GPP access network sends the access authentication result information to the UE.

For details of step 626 to step 630, refer to the descriptions of step 530 to step 534, and details are not described herein again.

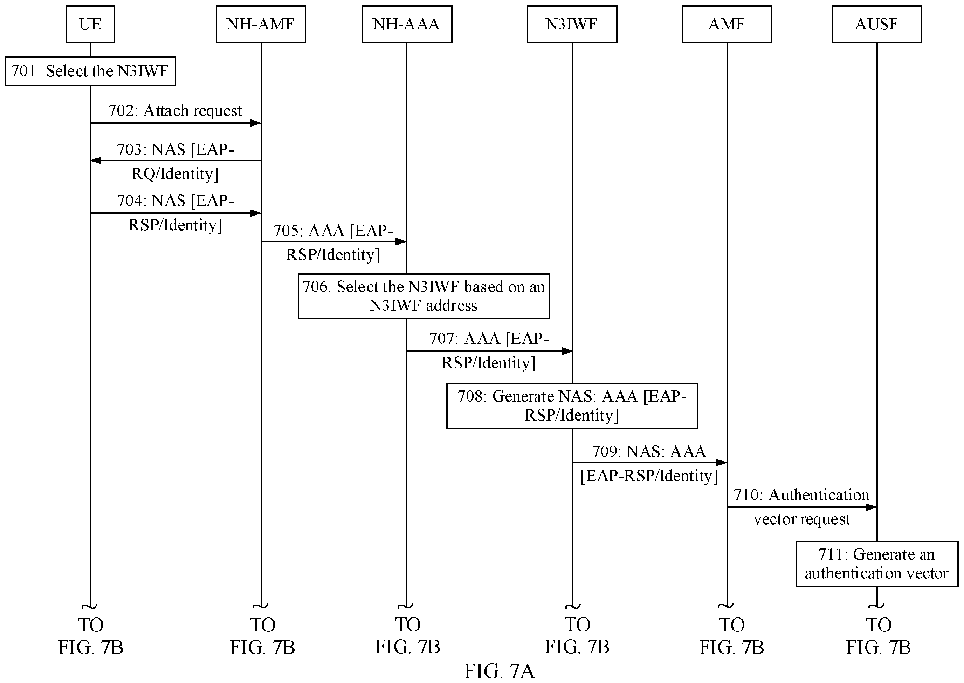

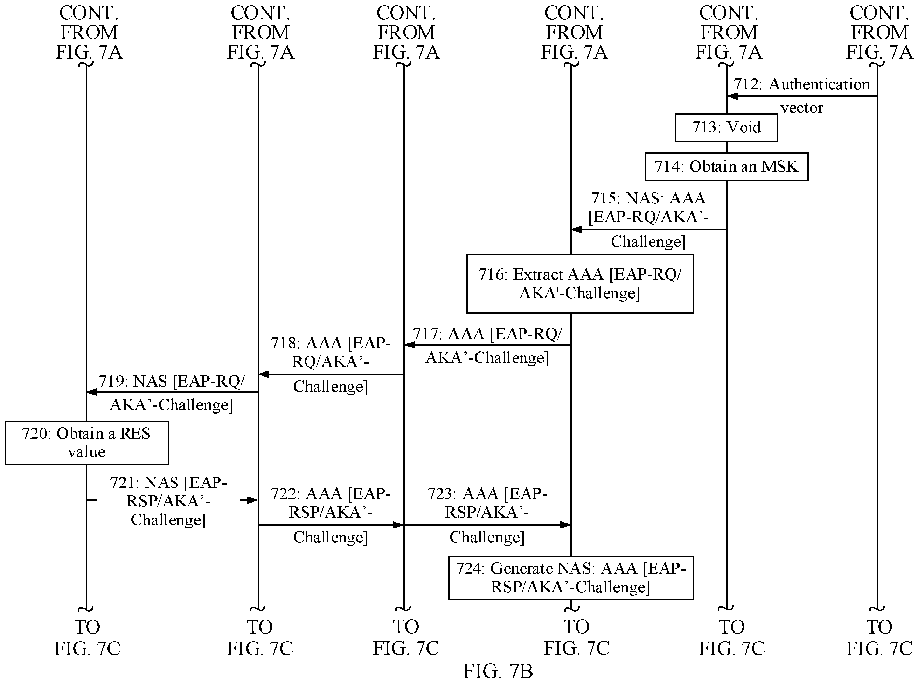

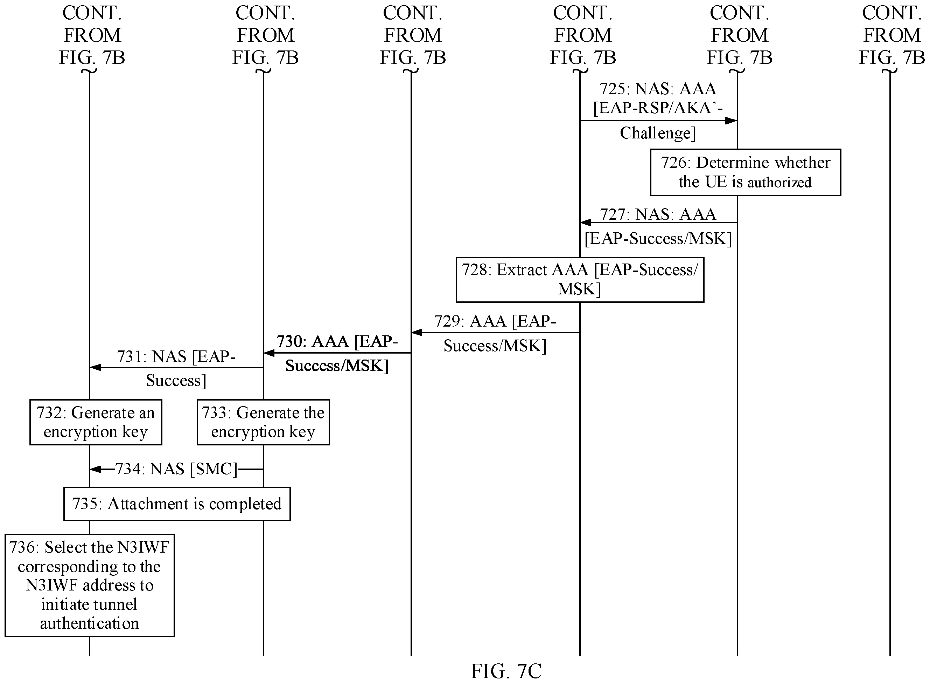

FIG. 7A, FIG. 7B, and FIG. 7C are schematic flowcharts of a sixth embodiment of an authentication method according to this application. The method in this embodiment is described in detail based on the architecture in FIG. 1b. A difference between the method in this embodiment and the method in the fourth embodiment lies in that the UE first selects the N3IWF network element, and then initiates an access authentication procedure and a tunnel authentication procedure to the selected N3IWF network element. Specifically, the method in this embodiment includes the following steps.

Step 701: The UE selects the N3IWF network element.

Specifically, before the access authentication, the UE sends an ID of a PLMN in which the UE is located to a DNS. The UE receives an IP address of the N3IWF network element that is from the DNS based on a PLMN ID. When the UE receives IP addresses of a plurality of N3IWF network elements that are from the DNS, the UE may select, from the IP addresses of the plurality of N3IWF network elements, an N3IWF network element corresponding to one IP address.

For details of step 702 to step 705, refer to the descriptions of step 502 to step 504.

A difference between step 702 to step 705 and step 502 to step 504 lies in that a message sent in each step carries the IP address of the N3IWF network element selected in step 701.

Step 706: The NH-AAA network element selects a corresponding N3IWF network element based on the IP address of the N3IWF network element that is carried in a received AAA message.

Step 707: The NH-AAA network element sends the AAA message to the selected N3IWF network element.

For details of step 708 to step 736, refer to the descriptions of step 506 to step 534.

A difference between step 708 to step 736 and step 506 to step 534 lies in that a message in step 717 to step 719 may not carry the IP address of the N3IWF network element, and/or a message in step 729 to step 731 may not carry the IP address of the N3IWF network element.

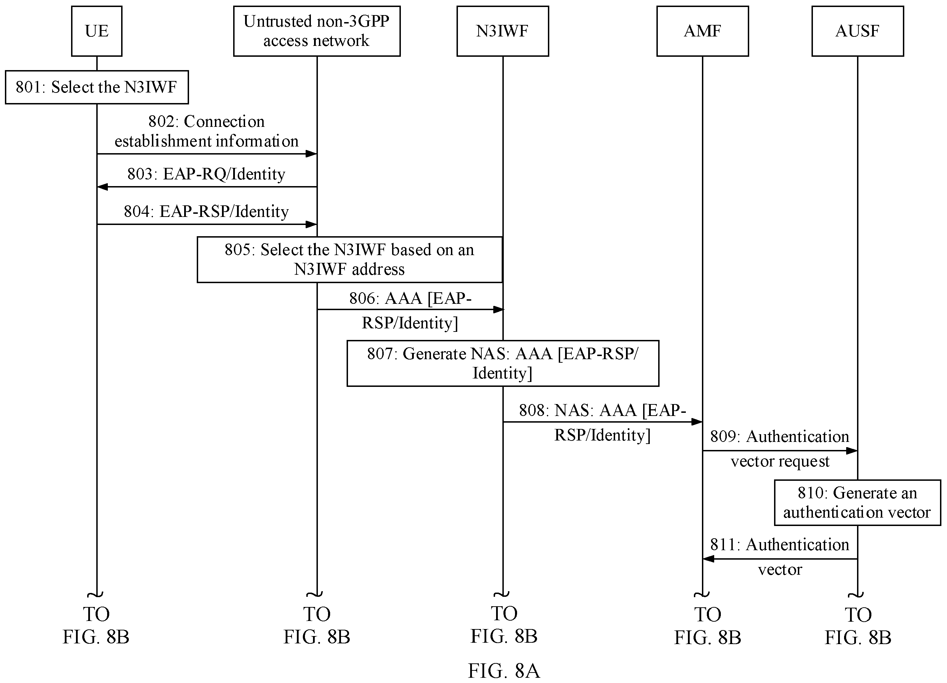

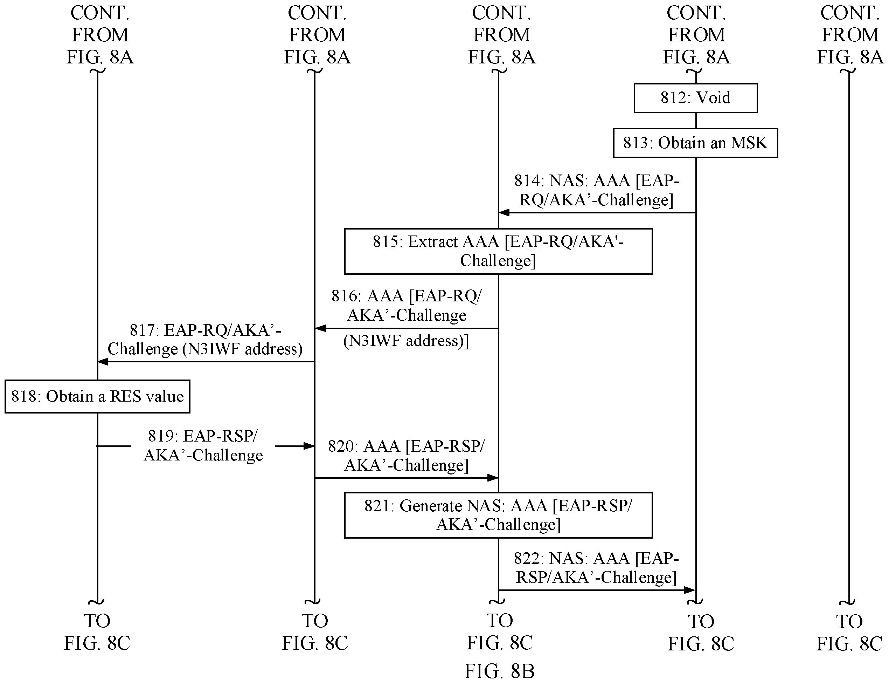

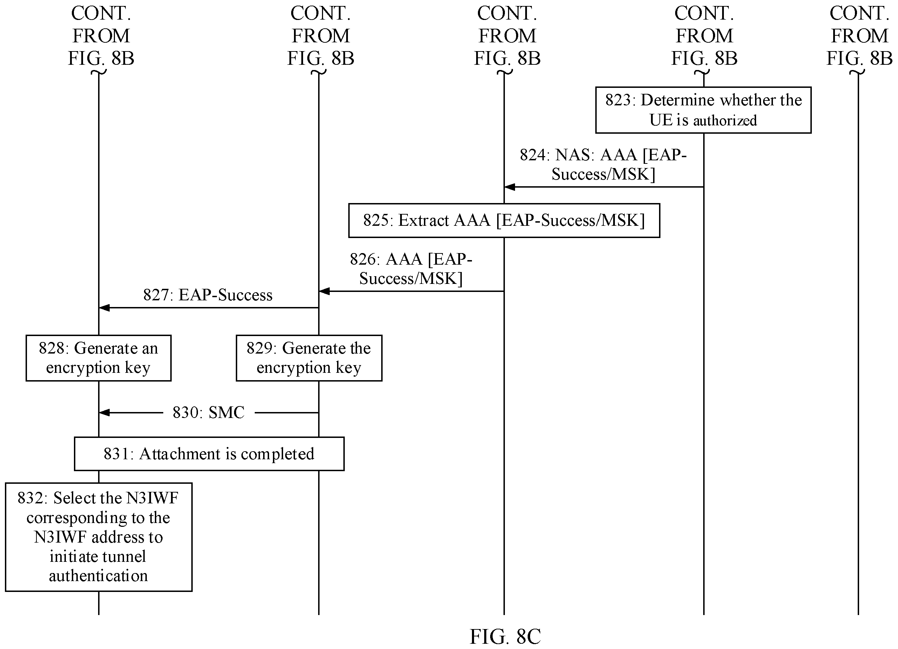

FIG. 8A, FIG. 8B, and FIG. 8C are schematic flowcharts of a seventh embodiment of an authentication method according to this application. The method in this embodiment is described in detail based on the architecture in FIG. 1a. A difference between the method in this embodiment and the method in the fifth embodiment lies in that the UE first selects the N3IWF network element, and then initiates an access authentication procedure and a tunnel authentication procedure to the selected N3IWF network element. In this embodiment, the untrusted non-3GPP access network may be an access node. Specifically, the method in this embodiment includes the following steps.

Step 801: The UE selects the N3IWF network element.

For details of this step, refer to the descriptions of step 701.

For details of step 802 to step 804, refer to the descriptions of step 701 to step 703.

A difference between step 802 to step 804 and step 701 to step 703 lies in that a message sent in each step carries an IP address of the N3IWF network element selected in step 801.

Step 805: The untrusted non-3GPP access network selects a corresponding N3IWF network element based on the IP address of the N3IWF network element carried in a received AAA message.

Step 806: The untrusted non-3GPP access network sends the AAA message to the selected N3IWF network element.

For details of step 807 to step 832, refer to the descriptions of step 605 to step 630.

A difference between step 807 to step 832 and step 605 to step 630 lies in that a message in step 816 to step 817 may not carry the IP address of the N3IWF network element, and/or a message in step 726 to step 727 may not carry the IP address of the N3IWF network element.

FIG. 5A and FIG. 5B are schematic flowcharts of an eighth embodiment of an authentication method according to this application. The method in this embodiment is described in detail based on the architecture in FIG. 1a. In this embodiment, access authentication and tunnel authentication are performed synchronously. In this embodiment, an untrusted non-3GPP access network may be an access node. Specifically, the method in this embodiment includes the following steps.

For details of step 901 to step 903, refer to the descriptions of step 401 to step 403.

Step 904: Establish an internet key exchange security access (internet key exchange security access, IKE SA) channel between UE and an N3IWF network element.

Step 905 to step 907: The UE initiates an IKE authentication request procedure.

For a specific procedure of step 904 to step 907, refer to the prior art. A difference between step 904 to step 907 and the prior art lies in that exchange information between the UE and the N3IWF network element includes an IP address allocated by the untrusted non-3GPP access network to the UE in step 903. Specifically, the UE adds the IP address to a packet of an exchanged authentication message. The IP address is used for a tunnel authentication procedure.

Step 908: The N3IWF network element selects an AMF network element used for the tunnel authentication.

For a specific method for selecting the AMF network element by the N3IWF network element, refer to the prior art.

Step 909: The N3IWF network element sends a registration request (Registration Request) message to the AMF network element.

Step 910a to step 910i: The AMF network element interacts with an AUSF network element, and performs EAP authentication on the UE.

Specifically, the AUSF network element certifies an UE ID, to complete the access authentication and the tunnel authentication. For a specific procedure of step 910a to step 910i, refer to the prior art. A difference lies in that exchange information between network elements includes the IP address allocated by the untrusted non-3GPP access network to the UE in step 903. Specifically, the UE adds the IP address to the packet of the exchanged authentication message.

Step 911: The AUSF network element sends an AAA message to the AMF network element.

The AAA message includes tunnel authentication result information (EAP-Success). The AAA message further includes access authentication result (access authentication result) information. In a possible implementation, the tunnel authentication result information includes the access authentication result information. In this embodiment, the tunnel authentication result information and the access authentication result information may be referred to as response information of tunnel authentication information.

Step 912: The AMF network element sends the response information of the tunnel authentication information to the N3IWF network element.

The AMF network element extracts the response information of the tunnel authentication information from the AAA message, and then sends the response information of the extracted tunnel authentication information to the N3IWF network element.

The response information of the tunnel authentication information includes the tunnel authentication result information and the access authentication result information.

Step 913: The N3IWF network element sends the access authentication result information to the untrusted non-3GPP access network.

After receiving the response information of the tunnel authentication information, the N3IWF network element obtains the access authentication result information from the response message of the tunnel authentication information. The N3IWF network element sends the access authentication result information to the untrusted non-3GPP access network.

Step 914: The untrusted non-3GPP access network sends response information of the access authentication result information to the N3IWF network element.

Step 915: The untrusted non-3GPP access network determines validity of an IP address of the UE based on the access authentication result information.

Specifically, the access authentication result information may be access authentication success information or access authentication failure information.

When the access authentication result information is the access authentication success information, the untrusted non-3GPP access network determines that the IP address allocated to the UE in step 903 is valid, and the untrusted non-3GPP access network allows the UE to continue to use the IP address to access the network. When the access authentication result information is the access authentication failure information, the untrusted non-3GPP access network determines that the IP address allocated to the UE in step 903 is invalid, and the untrusted non-3GPP access network prohibits the UE from continuing to use the IP address to access the network.

Step 916 to step 919: The N3IWF network element and the UE complete a tunnel authentication procedure.

For a specific procedure of step 916 to step 919, refer to the prior art. A difference lies in that in an exchange message between the N3IWF network element and the UE, the N3IWF network element sends the tunnel authentication result information and the access authentication result information to the UE.

Step 920: The UE determines the validity of the IP address based on the access authentication result information.

When the access authentication result information is the access authentication success information, the UE determines that the IP address allocated in step 903 is valid, and the UE continues to use the IP address to access the network. When the access authentication result information is the access authentication failure information, the UE determines that the IP address allocated in step 903 is invalid, and the UE stops using the IP address to access the network.

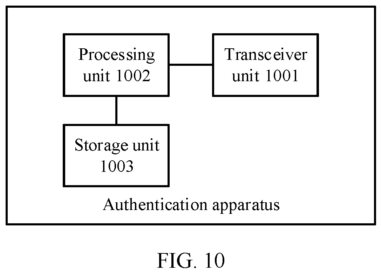

FIG. 10 is a schematic diagram of an authentication apparatus according to an embodiment of this application. The authentication apparatus includes a transceiver unit 1001, a processing unit 1002, and a storage unit 1003. The transceiver unit 1001, the processing unit 1002, and the storage unit 1003 may be physically separated units, or may be integrated into one or more physical units. This is not limited herein.

The transceiver unit 1001 is configured to implement content exchange between the processing unit 1002 and another unit or network element. Specifically, the transceiver unit 1001 may be a communications interface of the authentication apparatus, or may be a transceiver circuit or a transceiver. Alternatively, the transceiver unit 1001 may be a communications interface or a transceiver circuit of the processing unit 1002. Optionally, the transceiver unit 1001 may be a transceiver chip.

Although FIG. 10 shows only one transceiver unit 1001, the authentication apparatus may further include a plurality of transceiver units 1001, or the transceiver unit 1001 includes a plurality of sub-transceiver units. The transceiver unit 1001 may further include a sending unit and a receiving unit, configured to perform corresponding sending and receiving operations.

The processing unit 1002 is configured to implement data processing performed by the authentication apparatus. The processing unit 1002 may be a processing circuit or may be a processor. The processor may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (Generic Array Logic, GAL), or any combination thereof.

Although FIG. 10 shows only one processing unit 1002, the authentication apparatus may further include a plurality of processing units, or the processing unit 1002 includes a plurality of sub-data processing units. Specifically, the processor may be a single-core (single-CPU) processor, or may be a multi-core (multi-CPU) processor.

The storage unit 1003 is configured to store a computer instruction executed by the processing unit 1002. The storage unit 1003 may be a storage circuit or may be a memory. The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The storage unit 1003 may be a unit independent of the processing unit 1002, or may be a storage unit in the processing unit 1002. This is not limited herein. Although FIG. 10 shows only one storage unit 1003, the authentication apparatus may further include a plurality of storage units 1003, or the storage unit 1003 includes a plurality of sub-storage units.

In embodiments of this application, the processing unit 1002 may exchange content with another network element by using the transceiver unit 1001. For example, the processing unit 1002 obtains or receives content from another network element. If the processing unit 1002 and the transceiver unit 1001 are two physically separated components, the processing unit 1002 may exchange content with another unit in the authentication apparatus without using the transceiver unit 1001.

In a possible implementation, the transceiver unit 1001, the processing unit 1002, and the storage unit 1003 may be connected to each other by using a bus. The bus may be a peripheral component interconnect (peripheral component interconnect, PCI) bus, an extended industry standard architecture (industry standard architecture, EISA) bus, or the like. The bus may be classified into an address bus, a data bus, a control bus, and the like.

In this embodiment of this application, the processing unit 1002 enables, based on the computer instruction stored in the storage unit 1003, the authentication apparatus to implement the methods according to the first embodiment to the eighth embodiment of this application.

In this embodiment of this application, the authentication apparatus may be a data processing chip or a data processing chip module, for example, a system on chip (System on Chip, SoC).

Specifically, the authentication apparatus may be an access network element, for example, an N3IWF network element or an access node. Alternatively, the authentication apparatus may be a terminal device.

When the authentication apparatus is the access network element, in a possible implementation, the transceiver unit 1001 is configured to receive access authentication information from a terminal device; the processing unit 1002 is configured to generate a first message based on the access authentication information, where the first message includes the access authentication information; the transceiver unit 1001 is further configured to: send the first response message to an access management network element, and receive a first response message from the access management network element in response to the first message, where the first response message includes response information of the access authentication information; and the transceiver unit 1001 is further configured to send the response information of the access authentication information to the terminal device based on the first response message.

In a possible implementation, the first message is a non-access stratum NAS message or an N2 interface message, and the N2 interface is an interface between the authentication apparatus and the access management network element.

In a possible implementation, the first response message includes indication information, the indication information is used to indicate that the first response message is used for access authentication, and the processing unit is further configured to extract the response information of the access authentication information from the first response message based on the indication information.

In a possible implementation, the indication information is an access authentication indication or a message type.

In a possible implementation, the transceiver unit is further configured to send address information of the access network element to the terminal device.

In this embodiment, the transceiver unit 1001 is configured to implement content sending and receiving operations between the access network element and an external network element in the first embodiment of this application. The transceiver unit 1001 is further configured to implement content sending and receiving operations between the N3IWF network element and an external network element in the fourth embodiment to the seventh embodiment of this application. The processing unit 1002 is configured to implement processing operations of internal data or signaling of the access network element in the first embodiment of this application. For example, the processing unit 1002 is configured to implement operations of step 202 or step 205 in the first embodiment. The processing unit 1002 is further configured to implement processing operations of internal data or signaling of the N3IWF network element in the fourth embodiment to the seventh embodiment of this application.

In this embodiment, the processing unit 1002 enables, based on the computer instruction stored in the storage unit 1003, the authentication apparatus to implement operations performed by the access network element in the first embodiment of this application or the N3IWF network element in the fourth embodiment to the seventh embodiment of this application. For example, the operations are as follows:
receiving the access authentication information from the terminal device by using the transceiver unit 1001; generating the first message based on the access authentication information, where the first message includes the access authentication information; sending the first message to the access management network element by using the transceiver unit 1001; receiving, by using the transceiver unit 1001, the first response message from the access management network element in response to the first message, where the first response message includes the response information of the access authentication information; and sending, by using the transceiver unit 1001, the response information of the access authentication information to the terminal device based on the first response message.

In a possible implementation, the first response message includes the indication information, and the indication information is used to indicate that the first response message is used for access authentication; and the processing unit 1002 is further configured to perform the following operation based on the computer instruction stored in the storage unit 1003: extracting the response information of the access authentication information in the first response message based on the indication information.

In a possible implementation, the processing unit 1002 is further configured to perform the following operation based on the computer instruction stored in the storage unit 1003: sending the address information of the access network element to the terminal device by using the transceiver unit 1003.

In a possible implementation, the transceiver unit 1001 may be a communications interface of the authentication apparatus, the processing unit 1002 may be a processor of the authentication apparatus, and the storage unit 1003 may be a memory of the authentication apparatus.

When the authentication apparatus is the terminal device, in a possible implementation, the transceiver unit 1001 is configured to obtain the address information of the access network element used for the access authentication; and the processing unit 1002 is configured to select the access network element corresponding to the address information to initiate a tunnel authentication procedure.

In a possible implementation, the transceiver unit 1001 is configured to receive, in an access authentication process, the address information of the access network element that is from the access network element.

In a possible implementation, the transceiver unit 1001 is configured to send, to a domain name system DNS, identification information of a public land mobile network PLMN in which the authentication apparatus is located; and the transceiver unit 1001 is further configured to receive the address information of the access network element that is from the domain name system based on the identification information of the PLMN

In a possible implementation, the processing unit 1002 is further configured to initiate an access authentication procedure to the access network element corresponding to the address information.

In this embodiment, the transceiver unit 1001 is further configured to implement content sending and receiving operations between the UE and an external network element in the fourth embodiment to the seventh embodiment of this application. The processing unit 1002 is further configured to implement processing operations of internal data or signaling of the UE in the fourth embodiment to the seventh embodiment of this application.

In this embodiment, the processing unit 1002 enables, based on the computer instruction stored in the storage unit 1003, the authentication apparatus to implement operations performed by the UE in the fourth embodiment to the seventh embodiment of this application. For example, the operations are as follows:
obtaining, by using the transceiver unit 1001, the address information of the access network element used for the access authentication; and selecting the access network element corresponding to the address information to initiate the tunnel authentication procedure.

In a possible implementation, the obtaining, by using the transceiver unit 1001, the address information of the access network element used for the access authentication includes: receiving, by using the transceiver unit 1001 in an access authentication process, the address information of the access network element that is from the access network element.

In a possible implementation, the obtaining, by using the transceiver unit 1001, the address information of the access network element used for the access authentication includes: sending, by using the transceiver unit 1001 to the domain name system DNS, the identification information of the public land mobile network PLMN in which the authentication apparatus is located; and receiving, by using the transceiver unit 1001, the address information of the access network element that is from the domain name system based on the identification information of the PLMN

In a possible implementation, the processing unit 1002 is further configured to perform, based on the computer instruction stored in the storage unit 1003, the following operation: initiating, by using the transceiver unit 1001, the access authentication procedure to the access network element corresponding to the address information.

In a possible implementation, the transceiver unit 1001 may be a transceiver of the authentication apparatus, the processing unit 1002 may be a processor of the authentication apparatus, and the storage unit 1003 may be a memory of the authentication apparatus.

When the authentication apparatus is an access node, in a possible implementation, the transceiver unit 1001 is configured to receive connection establishment information from the terminal device, where the connection establishment information is used to establish a connection between the terminal device and the access node; the processing unit 1002 is configured to allocate address information to the terminal device, where the address information is used to perform an authentication process; the transceiver unit 1001 is further configured to receive authentication process result information from an access gateway, where the authentication process result information includes access authentication result information; and the processing unit 1002 is further configured to determine validity of the address information of the terminal device based on the access authentication result information.

In a possible implementation, the access authentication result information is access authentication success information, and the processing unit 1002 is configured to determine, based on the access authentication success information, that the address information of the terminal device is valid.

In a possible implementation, the access authentication result information is access authentication failure information, and the processing unit 1002 is configured to determine, based on the access authentication failure information, that the address information of the terminal device is invalid.

In this embodiment, the transceiver unit 1001 is configured to implement content sending and receiving operations between the access node and an external network element in the third embodiment of this application. The transceiver unit 1001 is further configured to implement content sending and receiving operations between the untrusted non-3GPP access network and an external network element in the eighth embodiment of this application. The processing unit 1002 is configured to implement processing operations of internal data or signaling of the access node in the third embodiment of this application. The processing unit 1002 is further configured to implement processing operations of internal data or signaling of the untrusted non-3GPP access network in the eighth embodiment of this application.

In this embodiment, the processing unit 1002 enables, based on the computer instruction stored in the storage unit 1003, the authentication apparatus to implement operations performed by the access node in the third embodiment and the untrusted non-3GPP access network in the eighth embodiment of this application. For example, the operations are as follows:
receiving the connection establishment information from the terminal device by using the transceiver unit 1001, where the connection establishment information is used to establish a connection between the terminal device and the access node; allocating the address information to the terminal device by using the transceiver unit 1001, where the address information is used to perform an authentication process; receiving, by using the transceiver unit 1001, the authentication process result information from the access gateway, where the authentication process result information includes the access authentication result information; and determining the validity of the address information of the terminal device based on the access authentication result information.

In a first possible implementation, the access authentication result information is the access authentication success information; and the determining the validity of the address information of the terminal device based on the access authentication result information includes: determining, based on the access authentication success information, that the address information of the terminal device is valid.

In a first possible implementation, the access authentication result information is the access authentication failure information; and the determining the validity of the address information of the terminal device based on the access authentication result information includes: determining, based on the access authentication failure information, that the address information of the terminal device is invalid.

In a possible implementation, the transceiver unit 1001 may be a communications interface of the authentication apparatus, the processing unit 1002 may be a processor of the authentication apparatus, and the storage unit 1003 may be a memory of the authentication apparatus.

When the authentication apparatus is another terminal device, in a possible implementation, the transceiver unit 1001 is configured to obtain address information of the authentication apparatus; the transceiver unit 1001 is further configured to send tunnel authentication information to an access gateway, where the tunnel authentication information includes the address information of the authentication apparatus; the transceiver unit 1001 is further configured to receive response information of the tunnel authentication information from the access gateway, where the response information of the tunnel authentication information includes access authentication result information; and the processing unit 1002 is configured to determine validity of the address information of the authentication apparatus based on the access authentication result information.

In a possible implementation, the access authentication result information is access authentication success information, and the processing unit 1002 is configured to determine, based on the access authentication success information, that the address information of the authentication apparatus is valid.

In a possible implementation, the access authentication result information is access authentication failure information, and the processing unit 1002 is configured to determine, based on the access authentication failure information, that the address information of the authentication apparatus is invalid.

In a possible implementation, the transceiver unit 1001 is further configured to receive the address information that is of the authentication apparatus and that is from the access node.

In this embodiment, the transceiver unit 1001 is further configured to implement content sending and receiving operations between the UE and an external network element in the third embodiment and the eighth embodiment of this application. The processing unit 1002 is further configured to implement processing operations of internal data or signaling of the UE in the third embodiment and the eighth embodiment of this application.

In this embodiment, the processing unit 1002 enables, based on the computer instruction stored in the storage unit 1003, the authentication apparatus to implement operations performed by the UE in the third embodiment and the eighth embodiment of this application. For example, the operations are as follows:
obtaining the address information of the terminal device by using the transceiver unit 1001; sending the tunnel authentication information to the access gateway by using the transceiver unit 1001, where the tunnel authentication information includes the address information of the authentication apparatus; receiving, by using the transceiver unit 1001, the response information from the access gateway in response to the tunnel authentication information, where the response information of the tunnel authentication information includes the access authentication result information; and determining the validity of the address information of the authentication apparatus based on the access authentication result information.

In a first possible implementation, the access authentication result information is the access authentication success information; and the determining the validity of the address information of the authentication apparatus based on the access authentication result information includes: determining, based on the access authentication success information, that the address information of the authentication apparatus is valid.

In a first possible implementation, the access authentication result information is the access authentication failure information; and the determining the validity of the address information of the authentication apparatus based on the access authentication result information includes: determining, based on the access authentication failure information, that the address information of the authentication apparatus is invalid.

In a possible implementation, the obtaining the address information of the authentication apparatus by using the transceiver unit 1001 includes: receiving, by using the transceiver unit 1001, the address information of the authentication apparatus that is from the access node.

In a possible implementation, the transceiver unit 1001 may be a transceiver of the authentication apparatus, the processing unit 1002 may be a processor of the authentication apparatus, and the storage unit 1003 may be a memory of the authentication apparatus.

When the authentication apparatus is an access gateway, in a possible implementation, the processing unit 1002 is configured to receive the tunnel authentication information from the terminal device by using the transceiver unit 1001, where the tunnel authentication information includes the address information allocated by the access node to the terminal device; the processing unit 1002 is further configured to send, by using the transceiver unit 1001, the tunnel authentication information to the access management network element; the processing unit 1002 is configured to receive, by using the transceiver unit 1001, the response information of the tunnel authentication information from the access management network element, where the response information of the tunnel authentication information includes the access authentication result information; and the processing unit 1002 is configured to send, by using the transceiver unit 1001, the response information of the tunnel authentication information to the terminal device.

In this embodiment, the transceiver unit 1001 is further configured to implement content sending and receiving operations between the N3IWF network element and an external network element in the third embodiment and the eighth embodiment of this application. The processing unit 1002 is further configured to implement processing operations of internal data or signaling of the N3IWF network element in the third embodiment and the eighth embodiment of this application.

In this embodiment, the processing unit 1002 enables, based on the computer instruction stored in the storage unit 1003, the authentication apparatus to implement operations performed by the N3IWF network element in the third embodiment and the eighth embodiment of this application.

In a possible implementation, the transceiver unit 1001 may be a communications interface of the authentication apparatus, the processing unit 1002 may be a processor of the authentication apparatus, and the storage unit 1003 may be a memory of the authentication apparatus.

An embodiment of this application further provides a computer storage medium. The computer-readable storage medium stores an instruction. When the instruction is run on a computer, the computer is enabled to perform operations of the network element in any one of Embodiment 1 to Embodiment 8.

An embodiment of this application further provides a computer program product including an instruction. When the computer program product is run on a computer, the computer is enabled to perform operations of the network element in any one of Embodiment 1 to Embodiment 8.

In the embodiments of this application, for ease of understanding, a plurality of examples are used for description. However, these examples are merely examples, but this does not mean that these examples are optimal implementations for implementing this application.

In the embodiments of this application, for ease of description, a request message, a response message, and names of various other messages are used. However, these messages are merely used as examples to describe content that needs to be carried or an implemented function. Specific names of the messages constitute no limitation to this application. For example, the messages may be a first message, a second message, and a third message. These messages may be some specific messages, or may be some fields in the messages. These messages may alternatively represent various service operations.

All or some of the foregoing embodiments may be implemented by using software, hardware, firmware, or any combination thereof. When software is used to implement the embodiments, all or some of the embodiments may be implemented in a form of a computer program product. The computer program product may include one or more computer instructions. When the computer program instructions are loaded and executed on a computer, the procedure or functions according to the embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid-state disk (solid state disk, SSD)), or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. This is not limited herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, comprising:
receiving, by an access network element, access authentication information from a terminal device;
generating, by the access network element, a first message based on the access authentication information, wherein the first message comprises the access authentication information;
sending, by the access network element, the first message to an access management network element;
receiving, by the access network element, a first response message from the access management network element in response to the first message, wherein the first response message comprises response information of the access authentication information; and
sending, by the access network element, the response information of the access authentication information to the terminal device based on the first response message.

2. The method according to claim 1, wherein
the first message is a non-access stratum NAS message or an N2 interface message, and an N2 interface is an interface between the access network element and the access management network element.

3. The method according to claim 1 or 2, wherein the first response message comprises indication information, and the indication information is used to indicate that the first response message is used for access authentication; and
the sending, by the access network element, the response information of the access authentication information to the terminal device based on the first response message comprises:
extracting, by the access network element, the response information of the access authentication information from the first response message based on the indication information; and
sending, by the access network element, the response information of the access authentication information to the terminal device.

4. The method according to claim 3, wherein the indication information is an access authentication indication or a message type.

5. The method according to any one of claims 1 to 4, wherein the method further comprises: sending, by the access network element, address information of the access network element to the terminal device.

6. An authentication method, comprising:
obtaining, by a terminal device, address information of an access network element that is used for access authentication; and
selecting, by the terminal device, the access network element corresponding to the address information to initiate a tunnel authentication procedure.

7. The method according to claim 6, wherein the obtaining, by a terminal device, address information of an access network element that is used for access authentication comprises:
receiving, by the terminal device in an access authentication process, the address information of the access network element that is from the access network element.

8. The method according to claim 6, wherein the obtaining, by a terminal device, address information of an access network element that is used for access authentication comprises:
sending, by the terminal device to a domain name system DNS, identification information of a public land mobile network PLMN in which the terminal device is located; and
receiving, by the terminal device, the address information of the access network element that is from the domain name system based on the identification information of the PLMN

9. The method according to any one of claims 6 to 8, wherein before the selecting, by the terminal device, the access network element corresponding to the address information to initiate a tunnel authentication procedure, the method further comprises:
initiating, by the terminal device, an access authentication procedure to the access network element corresponding to the address information.

10. An authentication method, comprising:
obtaining, by a terminal device, address information of the terminal device;
sending, by the terminal device, tunnel authentication information to an access gateway, wherein the tunnel authentication information comprises the address information of the terminal device;
receiving, by the terminal device, response information from the access gateway in response to the tunnel authentication information, wherein the response information of the tunnel authentication information comprises access authentication result information; and
determining, by the terminal device, validity of the address information of the terminal device based on the access authentication result information.

11. The method according to claim 10, wherein the access authentication result information is access authentication success information, and
the determining, by the terminal device, validity of the address information of the terminal device based on the access authentication result information comprises:
determining, by the terminal device based on the access authentication success information, that the address information of the terminal device is valid.

12. The method according to claim 10, wherein the access authentication result information is access authentication failure information, and
the determining, by the terminal device, validity of the address information of the terminal device based on the access authentication result information comprises:
determining, by the terminal device based on the access authentication failure information, that the address information of the terminal device is invalid.

13. The method according to any one of claims 10 to 12, wherein the obtaining, by a terminal device, address information of the terminal device comprises:
receiving, by the terminal device, the address information that is of the terminal device and that is from an access node.

14. An authentication apparatus, comprising:
a transceiver unit, configured to receive access authentication information from a terminal device; and
a processing unit, configured to generate a first message based on the access authentication information, wherein the first message comprises the access authentication information;
the transceiver unit is further configured to: send the first message to an access management network element, and receive a first response message from the access management network element in response to the first message, wherein the first response message comprises response information of the access authentication information; and
the transceiver unit is further configured to send the response information of the access authentication information to the terminal device based on the first response message.

15. The apparatus according to claim 14, wherein
the first message is a non-access stratum NAS message or an N2 interface message, and the N2 interface is an interface between the authentication apparatus and the access management network element.

16. The apparatus according to claim 14 or 15, wherein the first response message comprises indication information, and the indication information is used to indicate that the first response message is used for access authentication; and
the processing unit is further configured to extract the response information of the access authentication information from the first response message based on the indication information.

17. The apparatus according to claim 16, wherein the indication information is an access authentication indication or a message type.

18. The apparatus according to any one of claims 14 to 17, wherein the transceiver unit is further configured to send address information of the access network element to the terminal device.

19. An authentication apparatus, comprising:
a transceiver unit, configured to obtain address information of an access network element that is used for access authentication; and
a processing unit, configured to select the access network element corresponding to the address information to initiate a tunnel authentication procedure.

20. The apparatus according to claim 19, wherein the transceiver unit is configured to receive, in an access authentication process, the address information of the access network element that is from the access network element.

21. The apparatus according to claim 19, wherein the transceiver unit is configured to send, to a domain name system DNS, identification information of a public land mobile network PLMN in which the authentication apparatus is located; and
the transceiver unit is further configured to receive the address information of the access network element that is from the domain name system based on the identification information of the PLMN

22. The apparatus according to any one of claims 19 to 21, wherein the processing unit is further configured to initiate an access authentication procedure to the access network element corresponding to the address information.

23. An authentication apparatus, comprising a processing unit and a transceiver unit, wherein
the transceiver unit is configured to obtain address information of the authentication apparatus;
the transceiver unit is further configured to send tunnel authentication information to an access gateway, wherein the tunnel authentication information comprises the address information of the authentication apparatus;
the transceiver unit is further configured to receive response information from the access gateway in response to the tunnel authentication information, wherein the response information of the tunnel authentication information comprises access authentication result information; and
the processing unit is configured to determine validity of the address information of the authentication apparatus based on the access authentication result information.

24. The apparatus according to claim 23, wherein the access authentication result information is access authentication success information, and the processing unit is configured to determine, based on the access authentication success information, that the address information of the authentication apparatus is valid.

25. The apparatus according to claim 23, wherein the access authentication result information is access authentication failure information, and the processing unit is configured to determine, based on the access authentication failure information, that the address information of the authentication apparatus is invalid.

26. The apparatus according to any one of claims 23 to 25, wherein the transceiver unit is further configured to receive the address information that is of the authentication apparatus and that is from an access node.

27. An authentication apparatus, comprising a processor, a memory, and a communications interface, wherein
the memory is configured to store a computer instruction; and
the processor is configured to perform the following operations based on the computer instruction stored in the memory:
receiving, by using the communications interface, access authentication information from a terminal device;
generating a first message based on the access authentication information, wherein the first message comprises the access authentication information;
sending, by using the communications interface, the first message to an access management network element;
receiving, by using the communications interface, a first response message from the access management network element in response to the first message, wherein the first response message comprises response information of the access authentication information; and
sending, by using the communications interface, the response information of the access authentication information to the terminal device based on the first response message.

28. An authentication apparatus, comprising a processor, a memory, and a transceiver, wherein
the memory is configured to store a computer instruction; and
the processor is configured to perform the following operations based on the computer instruction stored in the memory:
obtaining, by using the transceiver, address information of an access network element that is used for access authentication; and
selecting the access network element corresponding to the address information to initiate a tunnel authentication procedure.

29. A computer storage medium, wherein the computer-readable storage medium stores an instruction, and when the instruction is run on a computer, the computer is enabled to perform the methods according to any one of claims 1 to 13.

30. A computer program product comprising an instruction, wherein when the computer program product is run on a computer, the computer is enabled to perform the methods according to any one of claims 1 to 13.
